(19) **Europäisches Patentamt**
**European Patent Office**
**Office européen des brevets**

(11) **EP 4 142 385 B1**

(12) **EUROPEAN PATENT SPECIFICATION**

(45) Date of publication and mention
of the grant of the patent:
**29.07.2026   Bulletin 2026/31**

(21) Application number: **21804456.8**

(22) Date of filing: **13.05.2021**

(51) International Patent Classification (IPC):
*H04W 68/00* (2009.01)   *H04W 68/02* (2009.01)
*H04W 8/24* (2009.01)   *H04W 48/12* (2009.01)

(52) Cooperative Patent Classification (CPC):
**H04W 68/005; H04W 68/025;** H04W 8/24;
H04W 48/12; Y02D 30/70

(86) International application number:
**PCT/CN2021/093578**

(87) International publication number:
**WO 2021/228192 (18.11.2021 Gazette 2021/46)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **15.05.2020   CN 202010415378**

(43) Date of publication of application:
**01.03.2023   Bulletin 2023/09**

(73) Proprietor: **Huawei Technologies Co., Ltd.
Longgang District,
Shenzhen,
Guangdong 518129 (CN)**

(72) Inventor: **SHAN, Baokun
Shenzhen, Guangdong 518129 (CN)**

(74) Representative: **Körber, Martin Hans
Mitscherlich PartmbB
Karlstraße 7
80333 München (DE)**

(56) References cited:
**WO-A1-2018/201499     WO-A1-2021/066726
CN-A- 109 792 712**

- **ERICSSON ET AL: "Introduction of WUS grouping", vol. RAN WG3, no. Online; 20200224 - 20200306, 15 February 2020 (2020-02-15), XP051854674, Retrieved from the Internet <URL:https://ftp.3gpp.org/tsg_ran/WG3_lu/ TSGR3_107_e/Docs/R3-201014.zip R3-201014 GWUS - disc paper.docx> [retrieved on 20200215]**
- **QUALCOMM INCORPORATED: "Serviced based UE sub-grouping on wake-up signal channel", vol. RAN WG2, no. Prague, Czech Republic; 20190826 - 20190830, 15 August 2019 (2019-08-15), XP051768243, Retrieved from the Internet <URL:http://www.3gpp.org/ftp/tsg_ran/ WG2_RL2/TSGR2_107/Docs/R2-1910465.zip> [retrieved on 20190815]**
- **VIVO: "Remaining aspects of PDCCH-based power saving signal", vol. RAN WG1, no. Reno, USA; 20191118 - 20191122, 9 November 2019 (2019-11-09), pages 1 - 11, XP051823177, Retrieved from the Internet <URL:https:// ftp.3gpp.org/tsg_ran/WG1_RL1/TSGR1_99/Docs/ R1-1912049.zip R1-1912049.docx> [retrieved on 20191109]**

**(Cont. next page)**

- HUAWEI, HISILICON: "Group based wake-up signal", 3GPP DRAFT; R2-1816400, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2018 (2018-11-16), Mobile Competence Centre ; 650, route des Lucioles ; F-06921 Sophia-Antipolis Cedex ; France
, pages 1 - 3, XP051480363
- VIVO: "On UE-group wake-up signal for eMTC", 3GPP DRAFT; R1-1808215_ON UE-GROUP WAKE-UP SIGNAL FOR EMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20180820 - 20180824, 10 August 2018 (2018-08-10), Mobile Competence Centre ; 650, route des Lucioles ; F-06921 Sophia-Antipolis Cedex ; France
, pages 1 - 4, XP051515600

## Description

### TECHNICAL FIELD

This application relates to the field of communication technologies, and in particular, to a communication method and apparatus.

### BACKGROUND

A terminal device monitors paging scheduling on a paging occasion (paging occasion, PO), and detects paging information based on paging scheduling. The PO is a special subframe in a paging frame (paging frame, PF). After determining the PF, the terminal device may determine the PO by querying a table. Currently, the terminal device determines the PF by using an identity (ID) of the terminal device and a corresponding configuration. PFs determined by a plurality of terminal devices may be a same PF, and POs determined by the plurality of terminal devices may be a same PO.

In addition, to reduce power consumption of the terminal in monitoring paging scheduling and detecting the paging information, a wake up signal (wake up signal, WUS) is introduced before each PO. Only if the terminal device detects the WUS before the PO, the terminal device needs to monitor a physical downlink control channel (physical downlink control channel, PDCCH) on a corresponding PO in a conventional manner, to monitor the paging information.

It can be learned from the foregoing description that the plurality of terminal devices may correspond to the same PO. In this case, there is a paging false alarm. For example, if POs determined by 100 terminal devices in a cell are a same PO, all the 100 terminal devices monitor the PO or monitor a WUS corresponding to the PO. If a base station needs to page one or more of the 100 terminal devices, the base station needs to send the corresponding WUS before the PO. In this case, another terminal device that is not paged also detects the WUS, and therefore is woken up to monitor the PDCCH and the paging information. This is the paging false alarm. For the terminal device that is not paged, monitoring the PDCCH, the paging information, and the like after monitoring the WUS is meaningless, and only causes extra power losses.

Document ERICSSON ET AL: "Introduction of WUS grouping", 3GPP DRAFT; R3-201014, 3RD GENERATION PARTNERSHIP PROJECT (3GPP), MOBILE COMPETENCE CENTR ; 650, ROUTE DES LUCIOLES; F-06921, SOPHIA-ANTIPOLIS CEDEX; FRANCE; vol. RAN WG3, 20200224-20200306, and document WO 2021/066726 A1 disclose broadcasting of a mapping between the core groups and the base station groups.

Document QUALCOMM INCORPORATED: "Serviced based UE sub-grouping on wake-up signal channel", 3GPP DRAFT; R2-1910465 SERVICE BASED WUS GROUPING, 3RD GENERATION PARTNERSHIP PROJECT (3GPP), MOBILE COMPETENCE CENTRE; 650, ROUTE DES LUCIOLES; F-06921; SOPHIA-ANTIPOLIS CEDEX; FRANCE; vol. RAN WG2, no. Prague, Czech Republic; 20190826-20190830, discloses a mapping of the network core groups into the base station groups.

Document VIVO: "Remaining aspects of PDCCH-based power saving signal", 3GPP DRAFT; R1-1912049, 3RD GENERATION PARTNERSHIP PROJECT (3GPP), MOBILE COMPETENCE CENTRE; 650, ROUTE DES LUCIOLES; F-06921, SOPHIA-ANTIPOLIS CEDEX; FRANCE; vol. RAN WG1, no. Reno, USA; pages 1-11, discloses paging control information as an indication of the WUS group to be monitored for wakeup.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention. Embodiments of this application provide a communication method and apparatus, to reduce power consumption of a terminal device in paging.

In embodiments of this application, terminal devices are grouped. Different paging manners may be used for terminal devices in different groups. If one terminal device determines through monitoring that a paging manner is not a paging manner of a group to which the terminal device belongs, the terminal device may not need to monitor paging information or the like. In this way, power consumption of the terminal device and a false alarm probability can be reduced.

In addition, the access network device may not be limited to grouping performed by the core network device, but may set new groups, provided that a mapping relationship between the two grouping manners is established. This imposes fewer restrictions on the access network device. In addition, if the core network device performs grouping at a fine granularity, for example, the core network device performs grouping based on a probability value corresponding to a paging probability parameter and at a granularity of 5%, the core network device may classify the terminal devices into 20 groups. If the access network device does not set the new groups, paging manners need to be separately configured for the 20 groups. The access network device may not support so many paging manners. In this embodiment of this application, the access network device may further perform grouping in a second grouping manner. For example, the access network device also performs grouping based on the probability value corresponding to the paging probability parameter but at a granularity of 25%. In this case, the core network device may classify the terminal devices into four groups, and the access network device may establish the mapping relationship between the two grouping manners. Therefore, the access network device only needs to support a small quantity of paging manners to complete paging, which is flexible. In addition, the access network device may determine a corresponding paging manner for a terminal device included in each group classified by the core network device.

In embodiments of this application, terminal devices are grouped. Different paging manners may be used for terminal devices in different groups, so that power consumption of the terminal devices and a false alarm probability can be reduced.

## BRIEF DESCRIPTION OF DRAWINGS

FIG. 1 is a schematic diagram of a paging process of a core network device;
FIG. 2 is a flowchart of a paging process of a core network device;
FIG. 3 is a schematic diagram of a relationship between a PO and a WUS in one PTW;
FIG. 4 is a schematic diagram of an application scenario according to an embodiment of this application;
FIG. 5A and FIG. 5B are a flowchart of a communication method according to an embodiment of this application;
FIG. 6 is a schematic block diagram of an access network device according to an embodiment of this application;
FIG. 7 is a schematic block diagram of a first terminal device according to an embodiment of this application;
FIG. 8 is a schematic block diagram of a communication apparatus according to an embodiment of this application;
FIG. 9 is another schematic block diagram of a communication apparatus according to an embodiment of this application;
FIG. 10 is still another schematic block diagram of a communication apparatus according to an embodiment of this application; and
FIG. 11 is yet another schematic block diagram of a communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or interact a voice and data with the RAN. The terminal device may include user equipment (user equipment, UE), a wireless terminal device, a mobile terminal device, a device-to-device (device-to-device, D2D) terminal device, a vehicle-to-everything (vehicle to everything, V2X) terminal device, a machine-to-machine/machine-type communication (machine-to-machine/-machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

In embodiments of this application, the terminal device may further include a relay (relay). Alternatively, it is understood that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

(2) A network device includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between a terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolutional Node B) in an LTE system or a long term evolution-advanced (long term evolution-advanced, LTE-A) system, or may include a next generation NodeB (next generation node B, gNB) in a fifth generation (the 5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in embodiments of this application.

The network device may further include a core network device. The core network device includes, for example, a mobility management function (mobility management entity, MME) in a 4G system, or an access and mobility management function (access and mobility management function, AMF) or a user plane function (user plane function, UPF) in a 5G system.

In embodiments of this application, an apparatus configured to implement a function of a network device may be a network device, or may be an apparatus, for example, a chip system, that can support the network device in implementing the function. The apparatus may be mounted in the network device. The technical solutions provided in embodiments of this application are described by using an example in which the apparatus configured to implement functions of the network device is the network device.

(3) Radio resource control (radio resource control, RRC) status: A terminal device has three RRC statuses: an RRC connected (connected) state, an RRC idle (idle) state, and an inactive (inactive) state.

RRC connected (connected) state (also briefly referred to as a connected state, where the "connected state" and the "RRC connected state" are a same concept, and may be interchanged): The terminal device establishes an RRC connection to a network, and may transmit data.

RRC idle (idle) state (also briefly referred to as an idle state, where the "idle state" and the "RRC idle state" are a same concept, and may be interchanged): The terminal device does not establish an RRC connection to a network, and a base station does not store a context of the terminal device. If the terminal device needs to enter the RRC connected state from the RRC idle state, the terminal device needs to initiate an RRC connection establishment process.

RRC inactive state (also briefly referred to as an inactive state, where a "non-active state", a "deactivated state", the "inactive state", the "RRC inactive state", an "RRC deactivated state", and the like are a same concept, and may be interchanged): The terminal device previously enters the RRC connected state through an anchor base station. Then, the anchor base station releases the RRC connection, but stores the context of the terminal device. If the terminal device needs to re-enter the RRC connected state from the RRC inactive state, the terminal device needs to initiate an RRC connection resume process (or referred to as an RRC connection reestablishment process) through a base station on which the terminal device currently camps. Because the terminal device may be in a moving state, the base station on which the terminal device currently camps and the anchor base station of the terminal device may be a same base station, or may be different base stations. Compared with the RRC establishment process, the RRC resume process has a shorter delay and lower signaling overheads. However, the base station needs to store the context of the terminal device. This causes storage overheads of the base station.

(4) Discontinuous reception (discontinuous reception, DRX): Simply speaking, in a DRX mechanism, the terminal device may periodically enter a sleep state. and does not need to monitor a physical downlink control channel (physical downlink control channel, PDCCH).

(5) Terms "system" and "network" may be used interchangeably in embodiments of this application. "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, first paging information and a second paging information are merely intended to distinguish between different paging information, but do not indicate that the two paging information is different in a size, content, a sending sequence, a priority, an importance degree, or the like.

The foregoing describes concepts of some terms in embodiments of this application. The following describes technical features in embodiments of this application.

Mobile communication has greatly changed people's lives, but a pursuit of mobile communication with higher performance has never stopped. To meet an explosive mobile data traffic growth, massive device connections, and continuous emergence of various new services and application scenarios in the future, the fifth generation (5G) mobile communication system emerges. Market demand for an internet of things (internet of things, IoT), which is a part of 5G, is growing rapidly.

Currently, a solution for a feature of the internet of things has been proposed in the 3rd generation partnership project (3rd generation partnership project, 3GPP) standard based on a cellular network. For example, a narrowband internet of things (narrow band-internet of things, NB-IoT) network and an enhanced machine type communication (enhanced machine type communication, eMTC) network can carry an internet of things service by using a feature of a narrowband technology. The NB-IoT network uses a new radio technology independent of an existing cellular network (for example, long term evolution (long term evolution, LTE) network), so that a terminal device has lower costs, and lower supported rates and mobility. As a sub-characteristic of the existing cellular network (for example, the LTE network), for a feature of the internet of things, the eMTC network may support an IoT service in an LTE network. Compared with a conventional cellular network, a service and a terminal device in the internet of things have the following features:

(1) Low rate and long cycle of services: Compared with a conventional cellular network, on the internet of things, data packets generated by services are smaller and generally insensitive to delays.
(2) Massive-connection requirement: One NB-IoT base station may serve a huge quantity (more than tens of thousands) of internet of things terminal devices deployed on a large scale, such as smart water/electricity meters, smart households, vehicles, and wearable devices.
(3) Low-cost requirement: Compared with the existing cellular network terminal, terminal devices in the NB-IoT have lower costs, to implement massive deployment of terminal devices. The low-cost requirement requires very low implementation complexity of the terminal device.
(4) Low power consumption requirement: The NB-IoT requires lower power consumption of the terminal device, to save battery power of the terminal device, ensure extra-long standby time of the terminal device, and reduce labor costs of battery replacement.
(5) A lower service arrival rate: Generally, one service occurs only once in a few hours or even more than one day, and most of services are uplink-triggered services. To be specific, the network device does not page the terminal device. Only when the terminal device has an uplink service, the network device sends downlink response data.

When the terminal device is in the RRC idle state or the RRC inactive state, if the core network device needs to send downlink data to the terminal device, the core network device first sends paging information to the terminal device, to page the terminal device. After receiving the paging information, the terminal device initiates an RRC connection establishment process to receive the downlink data.

The terminal device in the RRC idle state or the RRC inactive state "wakes up" only on a paging occasion (paging occasion, PO) of the terminal device to receive the paging information. The terminal device first receives, on the PO of the terminal device, a PDCCH used to indicate the paging information, or downlink control information (downlink control information, DCI) carried on the PDCCH. The DCI indicates a time-frequency resource and the like for sending the paging information. After receiving the DCI, the terminal device receives the paging information based on an indication of the DCI. If the paging information carries an ID of the terminal device, it indicates that the terminal device is paged, and the terminal device needs to initiate an RRC connection setup procedure to access the base station, to receive the downlink data. Alternatively, if the paging information does not carry the ID of the terminal device, it indicates that the terminal device is not paged, and the terminal device may continue to "sleep" and "wake up" on a next PO.

During evolution of the NB-IoT and eMTC networks, a new feature is added to the standard in each release, to continuously optimize system performance. For example, in the release (Rel)-15, to reduce power consumption of the terminal device in monitoring a PDCCH used to schedule the paging information, a WUS is introduced before each PO. Only if the terminal device detects the WUS before the PO, the terminal device needs to monitor the PDCCH on a corresponding PO in a conventional manner, to monitor the paging information.

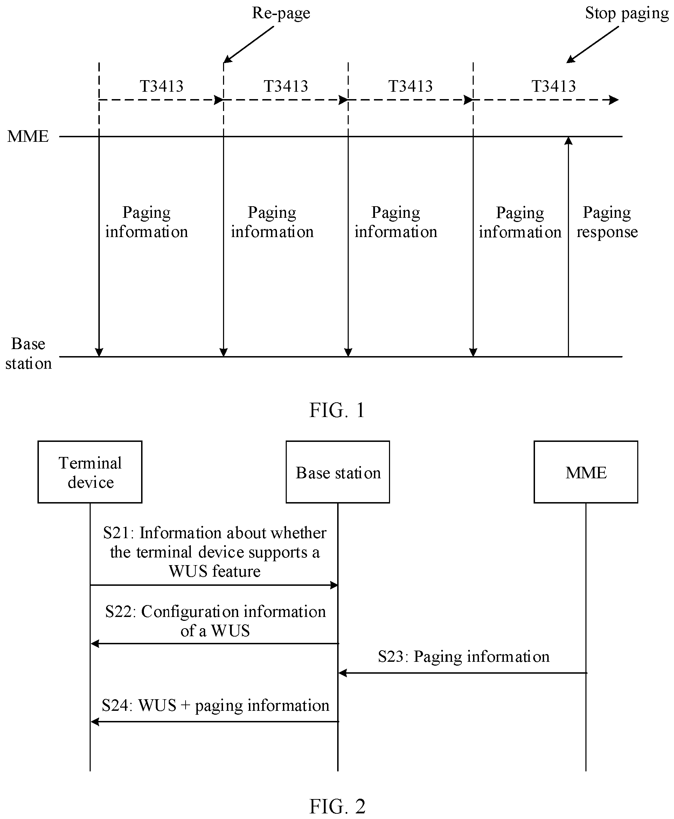

In an NB-IoT system, paging is usually initiated by the core network device, for example, an MME or an AMF. For example, the core network device sends, to the base station, paging information that includes information such as an ID of a terminal device to be paged, and then the base station performs paging in a corresponding cell. If receiving the paging information, the terminal device sends a paging response (paging response) to the core network device through the base station. To prevent a case that paging cannot succeed at a first attempt, the core network device usually maintains one timer each time the core network device sends paging information. When the timer expires, if no paging response is received from the terminal device, the core network device resends the paging information until receiving the paging response from the terminal device. For this procedure, refer to FIG. 1. T3413 in FIG. 1 indicates the timer. It can be learned that in several previous paging processes, the core network device does not receive the paging response from the terminal device when the timer T3413 expires. Therefore, the core network device resends a signal message when the timer T3413 expires. After the core network device sends paging information, if the core network device receives a paging response from the terminal device before the timer T3413 expires, the core network device may stop sending the paging information.

A network element that actually pages the terminal device over an air interface by using a wireless communication technology is the base station. In other words, the core network device sends the paging information to the base station, and the base station pages the terminal device over the air interface. For example, for a paging procedure, refer to FIG. 2. In the procedure shown in FIG. 2, an example in which a core network device is an MME is used.

S21: At any time when a terminal device enters an RRC connected state to communicate with a base station, the terminal device may send, to the base station, information about whether the terminal device supports a WUS feature, and the base station may receive, from the terminal device, the information about whether the terminal device supports the WUS feature.

Not all terminal devices support the WUS feature, and some terminal devices may not support WUS detection. Therefore, the terminal device may send information about whether the terminal device supports the WUS feature to a network, so that the network can use a corresponding paging manner for the terminal device.

For example, the information may be carried in UE-radio paging information (RadioPagingInfo). After receiving the information, the base station may send the information to the core network device, so that the core network device sends the information to the base station together with paging information during next paging.

S22: The base station broadcasts configuration information of a WUS, and the terminal device receives the configuration information from the base station.

The configuration information of the WUS includes, for example, a time domain position of the WUS or duration of the WUS. The terminal device may subsequently receive the WUS based on the configuration information of the WUS.

Steps 1 and 2 are preparations.

S23: The MME sends paging information. The MME sends the paging information to the base station, and the base station receives the paging information from the MME.

The paging information may include information such as an ID of a terminal device to be paged, and may further include information about whether the terminal device supports the WUS feature.

S24: The base station pages a terminal device.

The base station may page the terminal device based on a WUS capability of the terminal device. If the terminal device to be paged does not support the WUS, the base station may use a conventional paging manner. To be specific, the base station directly sends, on a PO, a PDCCH used to schedule paging information. If the PDCCH schedules the paging information, the base station sends the paging information later. If the PDCCH does not schedule the paging information, the base station does not send the paging information later, and does not send the WUS. If the terminal device to be paged supports the WUS, the base station may first send the WUS before the PO, to wake up the terminal device, and then send the PDCCH. Because the WUS is sent, it indicates that the PDCCH schedules the paging information, and then the base station sends the paging information. FIG. 2 uses an example in which the base station sends the WUS.

To further reduce power consumption, extended DRX (extended DRX, eDRX) is introduced to the DRX mechanism, to extend the DRX cycle to a larger value. In other words, the terminal device may "sleep" for a longer time and "wake up" again. A paging transmission window (paging transmission window, PTW) is introduced to eDRX. One eDRX cycle includes one PTW, and the PTW includes one or more POs. In one eDRX cycle, the terminal device "wakes up" on one or more POs in a PTW to receive paging information, until paging information including the ID of the terminal device is successfully received or the PTW ends.

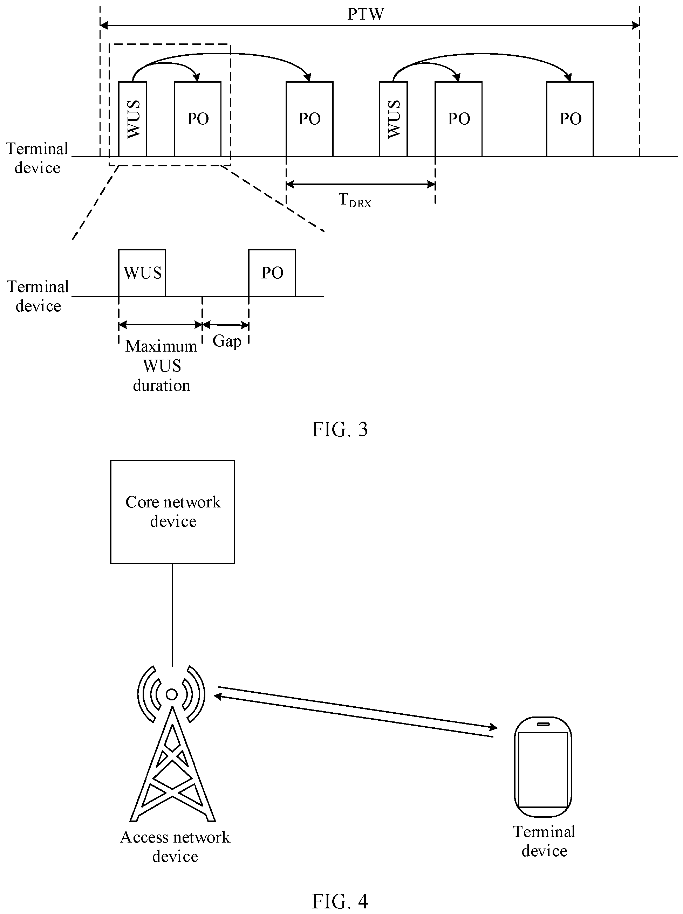

For a relationship between a PO and a WUS in one PTW for one terminal device, refer to FIG. 3. One WUS can correspond to one or more POs. The WUS is sent before the PO. After determining the PO, the terminal device may correspondingly determine a time domain position of the WUS based on WUS duration (for example, maximum WUS duration (maximum WUS duration) shown in FIG. 3) and duration of a gap (Gap) before the PO that are specified in a protocol. $T_{DRX}$ in FIG. 3 indicates duration of one DRX cycle. The terminal device monitors the WUS at the determined time domain position. If the WUS indicates that the terminal device is to be paged on a subsequent PO, the terminal device may monitor the subsequent PO. If the WUS indicates that the terminal device is not to be paged on the subsequent PO, the terminal device does not need to monitor a PDCCH on the PO in a conventional manner. The WUS is a simple sequence. A terminal device that is not paged only needs to monitor the WUS, and does not need to monitor the PDCCH or perform a corresponding decoding operation. Therefore, power consumption of WUS monitoring is less than power consumption of PDCCH monitoring. Therefore, introduction of the WUS helps reduce power consumption of PDCCH monitoring by the terminal device on the PO for receiving paging information.

The PO is one special subframe in a PF. After determining the PF, the terminal device may determine the PO by querying a table. Currently, the terminal device determines the PF by using the ID of the terminal device and a corresponding configuration. For example, a system frame number (system frame number, SFN) of a PF including a PO on which the terminal device performs monitoring in a DRX cycle, an index of the PO in the PF corresponding to the SFN, and the like may be determined according to the following formulas:

The SFN of the PF satisfies:

$$SFN \ mod \ T \ = \ \left(\frac{T}{N}\right) \ * \ (UE\_ID \ mod \ N) \ \text{(formula 1)}$$

The index $i_s$ of the PO in the SFN satisfies:

$$i_s \ = \ floor\left(\frac{UE\_ID}{N}\right) \ mod \ N_s \ \text{(formula 2)}$$

In the foregoing formulas, SFN indicates the system frame number of the paging frame, T indicates the DRX cycle, N indicates a total quantity of PFs included in one DRX cycle, $N_s$ indicates a quantity of POs included in one PF, mod indicates a modulo operation, UE_ID indicates a quantity obtained based on the ID of the terminal device, and floor(x) indicates rounding x down. T, N, $N_s$, and the like are all configured by the base station, and UE_ID is determined based on the ID of the terminal device. For example, UE_ID may be the last 10 bits of a 5G short-temporary mobile subscriber identity (5G short-temporary mobile subscriber identity, 5G-S-TMSI) of the terminal device.

The terminal device may query a table based on $i_s$ and $N_s$, to determine the PO. For example, for FDD, a PO of an NB-IoT system may be determined by querying the following Table 1:

**Table** 1

| $N_s$ | **PO** ($i_s$ = 0) | PO ($i_s$ = 1) | PO ($i_s$ = 2) | PO ($i_s$ = 3) |
|---|---|---|---|---|
| 1 | 9 | N/A | N/A | N/A |
| 2 | 4 | 9 | N/A | N/A |
| 4 | 0 | 4 | 5 | 9 |

For example, if $N_s$ = 1 and $i_s$ = 0, it may be determined that a sequence number of the PO in one PF is 9.

It can be learned that the PF is related to the ID of the terminal device. Due to a modulo operation, a correspondence between the ID of the terminal device and the PF may be many-to-one. In other words, a same PF may correspond to IDs of a plurality of terminal devices. Further, one PO also corresponds to the IDs of the plurality of terminal devices.

Because the plurality of terminal devices correspond to the same PO, there is a paging false alarm. For example, if POs determined by 100 terminal devices in a cell are a same PO, all the 100 terminal devices monitor the PO or monitor a WUS corresponding to the PO. If a base station needs to page one or more of the 100 terminal devices, the base station needs to send the corresponding WUS before the PO. In this case, another terminal device that is not paged also detects the WUS, and therefore is woken up to monitor the PDCCH and the paging information. This is the paging false alarm. For the terminal device that is not paged, monitoring the PDCCH, the paging information, and the like after monitoring the WUS is meaningless, and only causes extra power losses.

In view of this, the technical solutions in embodiments of this application are provided. In embodiments of this application, terminal devices are grouped. Different paging manners may be used for terminal devices in different groups. If one terminal device determines through monitoring that a paging manner is not a paging manner of a group to which the terminal device belongs, the terminal device may not need to monitor paging information or the like. In this way, power consumption of the terminal device and a false alarm probability can be reduced.

The technical solution provided in embodiments of this application may be applied to a 4th generation (the 4th generation, 4G) mobile communication technology system, for example, an LTE system, or may be applied to a 5G system, for example, an NR system, or may be applied to a next-generation mobile communication system or another similar communication system, provided that one entity can initiate paging to another entity. This is not specifically limited. In addition, an air interface communication process between the network device and the terminal device is used as an example in a description process of embodiments of this application. Actually, the technical solutions provided in embodiments of this application may also be applied to a sidelink (sidelink, SL), provided that one terminal device can initiate paging to another terminal device. For example, the technical solutions provided in embodiments of this application may be applied to a device-to-device (device-to-device, D2D) scenario, an NR D2D scenario, or an LTE D2D scenario; or may be applied to a vehicle to everything (vehicle to everything, V2X) scenario, an NR V2X scenario, or an LTE V2X scenario, for example, may be applied to an internet of vehicles, such as V2X, LTE-V, and vehicle-to-vehicle (vehicle-to-vehicle, V2V), or may be used in fields such as intelligent driving and intelligent connected vehicles.

FIG. 4 shows an application scenario according to an embodiment of this application. In FIG. 4, an access network device serves a terminal device in a wireless transmission manner. A core network device may initiate paging for the terminal device.

The core network device in FIG. 4 is, for example, an MME or an AMF. In FIG. 4, the access network device is, for example, a base station. The base station corresponds to different devices in different systems. For example, in a 4G system, the base station may correspond to a 4G base station, for example, an eNB. In a 5G system, the base station corresponds to a 5G base station, for example, a gNB. Certainly, the technical solutions provided in embodiments of this application may also be applied to a future mobile communication system. Therefore, the access network device in FIG. 4 may also correspond to an access network device in the future mobile communication system. FIG. 4 shows an example in which the access network device is the base station. Actually, with reference to the foregoing descriptions, the access network device may alternatively be a device such as an RSU. In addition, FIG. 4 shows an example in which the terminal device is a mobile phone. Actually, based on the foregoing descriptions of the terminal device, the terminal device in embodiments of this application is not limited to the mobile phone.

With reference to the accompanying drawings, the following describes methods provided in embodiments of this application.

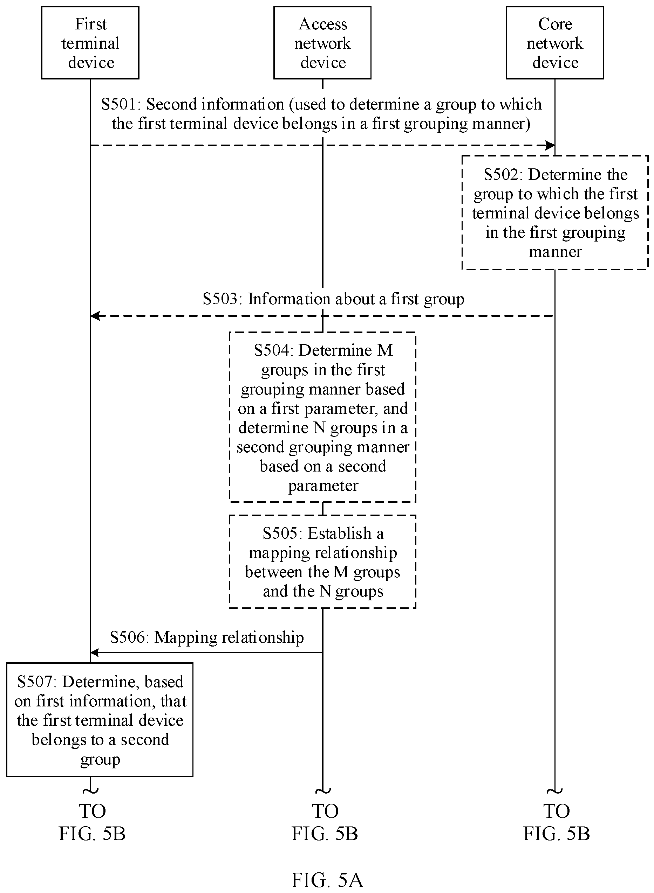

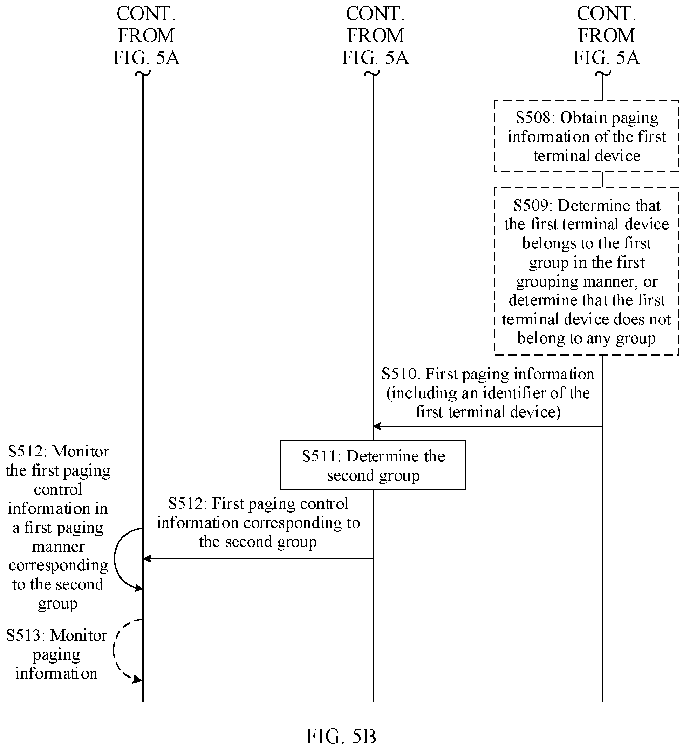

An embodiment of this application provides a communication method. FIG. 5A and FIG. 5B are a flowchart of the method. The following description uses an example in which the method is used in the network architecture shown in FIG. 4.

For ease of description, an example in which the method is performed by a network device and a terminal device is used below. Because this embodiment is applied to the network architecture shown in FIG. 4, the core network device described below may be the core network device in the network architecture shown in FIG. 4, the access network device described below may be the access network device in the network architecture shown in FIG. 4, and the terminal device described below may be the terminal device in the network architecture shown in FIG. 4.

S501: A first terminal device sends second information to a core network device, and the core network device receives the second information from the terminal device. The second information may be used to determine a group to which the first terminal device belongs in a first grouping manner. The first grouping manner is a manner of grouping based on a first parameter, or may also be referred to as a classification manner, or the like. It may be understood that the core network device roughly classifies a plurality of terminal devices. In this way, when paging the terminal device, the core network device only needs to add, to paging information, information about a group to which the terminal device belongs. For example, the core network device may separately page each terminal device. In this case, the paging information may include information about the group to which the terminal device belongs in the first grouping manner, and certainly may further include information such as an identifier of the terminal device. For another example, the core network device may page a group of terminal devices. To be specific, the group of terminal devices may be paged by sending a piece of paging information, provided that the paging information includes group information. In this case, information corresponding to each terminal device does not need to be added to the paging information, and signaling overheads are reduced.

The second information includes, for example, a first value, or includes information about a first group, or may include other information.

The first value is a value of the first parameter corresponding to the first terminal device. The first value may be used to determine the group to which the first terminal device belongs in the first grouping manner. This may be understood as that after obtaining the first value, a network device (for example, the core network device) may determine, based on the first value, the group to which the first terminal device belongs in the first grouping manner.

In an optional implementation, the first parameter is, for example, a paging probability parameter. The paging probability parameter may indicate a probability that the first terminal device is paged. In this case, the first value may be a value of the paging probability parameter.

For example, the first value may be a specific probability value. For example, if the first value is 85%, it indicates that the probability that the first terminal device is paged is 85%. The specific probability value may be determined by the first terminal device based on historical information. For example, the first terminal device may collect statistics about paging information received in first duration, and determine a specific probability.

For another example, the first value may alternatively be a paging probability range. For example, the first value may indicate that the probability that the first terminal device is paged is a high probability, a medium probability, or a low probability. If the first value is the paging probability range, the first terminal device may also determine the paging probability range based on historical information. For example, the first terminal device may collect statistics about paging information received in first duration. However, the first terminal device does not need to determine a specific probability, and only needs to roughly determine whether a probability of receiving the paging information by the first terminal device is high or low. Alternatively, in this case, the first terminal device may first determine a specific probability value, and also learns of a correspondence between the paging probability range and the probability value in advance. For example, a probability value range corresponding to a high probability is [70%, 100%], a probability value range corresponding to a medium probability is [40%, 70%), and a probability value range corresponding to a low probability is [0, 40%). After determining a value of a probability that the first terminal device is paged, the first terminal device may determine a specific paging probability range corresponding to the probability value, and the first value may indicate the paging probability range. The correspondence between the paging probability range and the probability value may be preconfigured on the first terminal device, for example, may be preconfigured when the first terminal device is delivered from a factory or maintained, or may be specified in a protocol, or may be configured by the network device (for example, the core network device) and sent to the first terminal device.

In another optional implementation, the first parameter may also be a service parameter. For example, the service parameter indicates the first terminal device to perform an uplink service or a downlink service, or it is understood that the service parameter indicates whether the first terminal device is of an uplink service trigger type or a downlink service trigger type. If the service parameter indicates the first terminal device to perform the uplink service, or indicates that the first terminal device is of the uplink service trigger type, it may be understood that the first terminal device performs only the uplink service, or a probability that the first terminal device performs the uplink service is greater than a probability that the first terminal device performs the downlink service. If the service parameter indicates the first terminal device to perform the downlink service, or indicates that the first terminal device is of the downlink service trigger type, it may be understood that the first terminal device performs only the downlink service, or a probability that the first terminal device performs the downlink service is greater than a probability that the first terminal device performs the uplink service. For example, if the first terminal device performs only the uplink service, or the probability of performing the uplink service is greater than the probability of performing the downlink service, the first terminal device may determine that the service parameter indicates the first terminal device to perform the uplink service (or may determine that the service parameter indicates that the first terminal device is of the uplink service trigger type). Alternatively, if the first terminal device performs only the downlink service, or the probability of performing the downlink service is greater than the probability of performing the uplink service, the first terminal device may determine that the service parameter indicates the first terminal device to perform the downlink service (or may determine that the service parameter indicates that the first terminal device is of the downlink service trigger type). The first terminal device may determine the service parameter based on a quantity of communication times of the first terminal device per unit time. For example, if the quantity of communication times of the first terminal device per unit time is less than a preset threshold, it may be determined that the first terminal device is of the uplink service trigger type. On the contrary, if the quantity of communication times of the first terminal device per unit time is greater than or equal to the preset threshold, it may be determined that the first terminal device is of the downlink service trigger type.

For example, when the group to which the first terminal device belongs is determined based on the service parameter of the first terminal device, the service parameter may actually indicate the probability that the first terminal device is paged. There are different probabilities that terminal devices with different service features are paged. In this way, a terminal device with a higher probability of being paged and a terminal device with a lower probability of being paged may be classified into different groups based on a service feature. Therefore, although the service parameter of the terminal device does not explicitly indicate the probability that the terminal device is paged, the service parameter may indirectly indicate the probability that the terminal device is paged. Generally, if the service parameter indicates that the terminal device is of the uplink service trigger type, it may be understood that the probability that the terminal device is paged is lower. If the service parameter indicates that the terminal device is of the downlink service trigger type, it may be understood that the probability that the terminal device is paged is higher.

For example, if the first terminal device is a water meter, an electricity meter, or the like, this type of terminal device usually only needs to send information such as a reading to the network device (for example, an access network device), and the network device usually does not send downlink information to this type of terminal device. In this case, this type of terminal device may determine that the service parameter indicates the first terminal device to perform the uplink service, or indicates that the first terminal device is of the uplink service trigger type. For another example, if the first terminal device is a street lamp, the network device (for example, an access network device) usually sends on/off signaling to this type of terminal device, to control to turn on or turn off the terminal device, and the terminal device usually does not send uplink information to the network device. In this case, this type of terminal device may determine that the service parameter indicates the first terminal device to perform the downlink service, or indicates that the first terminal device is of the downlink service trigger type.

Certainly, the first parameter may also be another parameter, for example, may also be an ID of the terminal device. In this case, the first value is an ID of the first terminal device. A type of the first parameter is not limited.

Alternatively, the second information may include the information about the first group. The terminal device sends the second information to the core network device, so that the core network device may determine the group to which the terminal device belongs in the first grouping manner. In a case, the core network device notifies the first terminal device of a classification criterion in the first grouping manner in advance. After obtaining the first value of the first parameter corresponding to the first terminal device, the first terminal device may determine, based on the classification criterion in the first grouping manner, the group to which the first terminal device belongs. In other words, the first terminal device may determine the information about the first group. The information about the first group may indicate that the first terminal device belongs to the first group, and the first group is a group in the first grouping manner. The first grouping manner may be a manner of grouping terminal devices based on the value of the first parameter. The first terminal device sends the information about the first group to the core network device, so that the core network device may determine that the first terminal device belongs to the first group, and does not need to classify first terminal devices. In this case, a workload of the core network device can be reduced. It should be noted that the first group may be any group in the first grouping manner, but not a group arranged first in a specific order (for example, in an order of probability values) in the first grouping manner. The following "second group" and the like have a similar meaning.

For example, the first parameter is the paging probability parameter, and the first terminal device determines that the first value of the first parameter corresponding to the first terminal device is 65%. The core network device notifies the first terminal device in advance that a probability value range [80%, 100%] corresponds to a group 1, a probability value range [60%, 80%) corresponds to a group 2, a probability value range [40%, 60%) corresponds to a group 3, a probability value range [20%, 40%) corresponds to a group 4, and a probability value range [0, 20%) corresponds to a group 5. In this case, the first terminal device may determine that the first terminal device belongs to the group 1, and the first terminal device may send information about the group 1 to the core network device. Then the core network device may determine that the first terminal device belongs to the group 1.

For example, the first terminal device may send the first information to the core network device by using a non-access stratum (non-access stratum, NAS) message.

S502: The core network device determines the group to which the first terminal device belongs in the first grouping manner. For example, if the core network device determines that the first terminal device belongs to the first group in the first grouping manner, S502 may also be understood as that the core network device determines information about the first group of the first terminal device. The information about the first group may indicate that the first terminal device belongs to the first group.

If the core network device receives the first value from the first terminal device, the core network device may classify the first terminal device into a corresponding group based on the first value. The first grouping manner may be a manner of grouping the terminal devices based on the first parameter. The core network device may predetermine a classification criterion of F groups in the first grouping manner. Alternatively, a classification criterion of the F groups in the first grouping manner may be specified in a protocol, where F is an integer greater than or equal to 1. For example, the first parameter is the paging probability parameter, F = 5, and a classification criterion of F groups is that a probability value range [80%, 100%] corresponds to a group 1, a probability value range [60%, 80%) corresponds to a group 2, a probability value range [40%, 60%) corresponds to a group 3, a probability value range [20%, 40%) corresponds to a group 4, and a probability value range [0, 20%) corresponds to a group 5. For another example, the first parameter is the paging probability parameter, F = 3, and a classification criterion of M groups is that a high probability corresponds to a group 1, a medium probability corresponds to a group 2, and a low probability corresponds to a group 3. For example, before S501, the core network device may notify the first terminal device in advance of a specific type of the first value (for example, the probability value or the paging probability range) sent by the first terminal device to the core network device, so that the first value sent by the terminal device may be used by the core network device to classify the first terminal device into one of the F groups.

For example, the classification criterion of the F groups is that a probability value range [80%, 100%] corresponds to a group 1, a probability value range [60%, 80%) corresponds to a group 2, a probability value range [40%, 60%) corresponds to a group 3, a probability value range [20%, 40%) corresponds to a group 4, and a probability value range [0, 20%) corresponds to a group 5. In this case, the core network device may notify in advance that the first terminal device needs to send the probability value to the core network device. For example, if the first value sent by the first terminal device is 85%, the core network device may classify the first terminal device into the group 1.

For another example, the classification criterion of the F groups is that a high probability corresponds to a group 1, a medium probability corresponds to a group 2, and a low probability corresponds to a group 3. In this case, the core network device may notify in advance that the first terminal device needs to send the paging probability range to the core network device. For example, if the first value sent by the first terminal device is the low probability, the core network device may classify the first terminal device into the group 3.

Alternatively, if the core network device receives the information about the first group, the core network device may determine that the first terminal device belongs to the first group, and does not need to classify the first terminal device.

Alternatively, the core network device stores registration information of the first terminal device, and the registration information of the first terminal device may include a service feature of the first terminal device. For example, the probability (the probability value or the paging probability range) that the first terminal device is paged may be determined based on the registration information of the first terminal device. Therefore, the core network device may further determine, based on the registration information of the first terminal device, the group to which the first terminal device belongs in the first grouping manner. Alternatively, the core network device may store statistical information of the first terminal device. The statistical information of the first terminal device may indicate, for example, the probability that the first terminal device is paged, or indicate the service feature of the first terminal device. Therefore, the core network device may further determine, based on the statistical information of the first terminal device, the group to which the first terminal device belongs in the first grouping manner. If either of the foregoing two cases occurs, the first terminal device does not need to send the second information to the core network device, in other words, the first terminal device does not need to perform S501, so that signaling overheads can be reduced.

S503: The core network device sends the information about the first group to the first terminal device, and the first terminal device receives the information about the first group from the access network device.

If determining that the first terminal device belongs to the first group, the core network device may send the information about the first group to the first terminal device, so that the terminal device may determine that the first terminal device belongs to the first group in the first grouping manner. For example, the core network device may send the information about the first group to the first terminal device by using a NAS message. If the second information sent by the terminal device is the information about the first group, the core network device may resend the information about the first group to the first terminal device, or the core network device may not need to send the information about the first group to the first terminal device.

It should be noted that, S501 to S503 may be considered as a process in which the first terminal device and the core network device negotiate the group to which the first terminal device belongs in the first grouping manner. The negotiation process may be transparent to the access network device, in other words, the access network device does not need to learn of the negotiation process. A plurality of terminal devices may determine, based on the negotiation process, the groups to which the plurality of terminal devices belong. FIG. 5A and FIG. 5B show an example in which the terminal device is the first terminal device. In addition, S501 to S503 are optional steps, and are not necessarily performed. S501 to S503 are indicated by dashed lines in FIG. 5A and FIG. 5B.

S504: The access network device determines M groups in the first grouping manner based on the first parameter, and determines N groups in a second grouping manner based on a second parameter. M and N both are integers greater than or equal to 1.

S504 may occur before S501 to S503, or S504 may occur after S501 to S503, or S504 and a step in S501 to S503 may occur simultaneously.

For example, the second grouping manner is a manner of grouping based on the second parameter, and the first grouping manner is a manner of grouping based on the first parameter. The first parameter is, for example, the paging probability parameter, the service parameter, or the ID of the terminal device. The second parameter is, for example, the paging probability parameter, the service parameter, or the ID of the terminal device.

The first grouping manner is a grouping manner used by the core network device, and the negotiation process for grouping between the terminal device and the core network device is transparent to the access network device. However, the first grouping manner may be specified in a protocol, or the core network device may notify the access network device of the first grouping manner, or the like. In other words, the access network device may learn of the first grouping manner. For example, M = F, and the M groups classified by the access network device are the same as F groups classified by the core network device. In other words, the access network device and the core network device adopt a same grouping manner, so that a mapping relationship determined by the access network device can be consistent with the grouping manner of the core network device, and the access network device may determine, as much as possible based on the mapping relationship, a paging manner corresponding to each terminal device. Alternatively, the M groups classified by the access network device may not be completely equivalent to the F groups. For example, some groups included in the F groups are not included in the M groups, or the F groups are completely different from the M groups.

The first parameter and the second parameter may be a same parameter, for example, both are paging probability parameters. Alternatively, the first parameter and the second parameter may be different parameters. For example, the first parameter is the paging probability parameter, and the second parameter is the service parameter. Alternatively, the first parameter is the paging probability parameter, and the second parameter is the ID of the terminal device. If the first parameter and the second parameter are the same parameter, the value of the first parameter and a value of the second parameter may be values of a same type, for example, both are probability values. Alternatively, the value of the first parameter and the value of the second parameter may be values of different types. For example, the value of the first parameter is a probability value, and the value of the second parameter is a paging probability range.

For example, the second parameter is the paging probability parameter, N = 4, and four groups classified by the access network device are: a group 1 corresponding to a probability value range [75%, 100%], a group 2 corresponding to a probability value range [50%, 75%), a group 3 corresponding to a probability value range [25%, 50%), and a group 4 corresponding to a probability value range [0, 25%).

For another example, the second parameter is the paging probability parameter, N = 2, and two groups classified by the access network device are a group 1 corresponding to a high probability, and a group 2 corresponding to a low probability.

For another example, the second parameter is the ID of the terminal device, and the access network device may classify the terminal devices into N groups based on possible values of the ID of the terminal device.

A manner of grouping based on the first parameter is also similar, and details are not described again.

S505: The access network device establishes a mapping relationship between the M groups and the N groups.

If the access network device classifies the terminal devices into the M groups based on the first parameter and classifies into the N groups based on the second parameter, the access network device may establish a mapping relationship between the M groups and the N groups. It may be understood that the access network device maps the M groups to the N groups, so that each of the M groups may correspond to one or more of the N groups, or each of the N groups may correspond to one or more of the M groups. It may be understood that the mapping relationship between the M groups and the N groups includes P sub-mapping relationships, each of the P sub-mapping relationships is a mapping relationship between one of the M groups and one of the N groups, and P is an integer greater than or equal to 1.

In addition, the access network device may associate each of the P sub-mapping relationships with one paging manner. One sub-mapping relationship corresponds to one paging manner, and one paging manner may correspond to one or more sub-mapping relationships. For example, a sub-mapping relationship 1 in the P sub-mapping relationships corresponds to a paging manner 1, and a sub-mapping relationship 2 in the P sub-mapping relationships corresponds to a paging manner 2. Alternatively, it may be understood that the access network device associates each group in the second grouping manner with one paging manner. One group in the second grouping manner corresponds to one paging manner, and one paging manner may correspond to one or more groups in the second grouping manner. In embodiments of this application, different paging manners may correspond to different paging control information, or it is understood that if different paging control information is sent by the access network device, different paging manners are used. For example, a paging manner 1 corresponds to paging control information 1, and a paging manner 2 corresponds to paging control information 2. For example, the paging control information is a WUS (or referred to as a WUS sequence), or is a PDCCH (or DCI) used to schedule paging information.

If the paging control information is a WUS sequence, the different paging control information may mean different WUS sequences (which may be understood herein as different codewords in the WUS sequences), or may mean different resource positions of WUS sequences. For example, the resource positions of the WUS sequences include one or more of the following: time domain resource positions of the WUS sequences, frequency domain resource positions of the WUS sequences, or code domain resource positions of the WUS sequences. For example, there are two WUS sequences. If the two WUS sequences have different time domain resource positions, it is considered that the two WUS sequences have different resource positions. Alternatively, if the two WUS sequences have different frequency domain resource positions, it is considered that the two WUS sequences have different resource positions. Alternatively, if the two WUS sequences have different code domain resource positions, it is considered that the two WUS sequences have different resource positions. Alternatively, if the two WUS sequences have different frequency domain resource positions and different time domain resource positions, it is considered that the two WUS sequences have different resource positions. Alternatively, if the two WUS sequences have different frequency domain resource positions and different code domain resource positions, it is considered that the two WUS sequences have different resource positions. Alternatively, if the two WUS sequences have different time domain resource positions and different code domain resource positions, it is considered that the two WUS sequences have different resource positions. Alternatively, if the two WUS sequences have different time domain resource positions, different frequency domain resource positions, and different code domain resource positions, it is considered that the two WUS sequences have different resource positions.

For example, different paging control information means different WUS sequences. In this case, for example, a paging control manner 1 corresponds to a WUS sequence 1, a paging control manner 2 corresponds to a WUS sequence 2, and the WUS sequence 1 and the WUS sequence 2 are different sequences. For another example, different paging control information means different resource positions of WUS sequences. For example, a paging control manner 1 corresponds to a WUS sequence 1, and a paging control manner 2 also corresponds to the WUS sequence 1. However, a time domain resource position of the WUS sequence 1 corresponding to the paging control manner 1 is a time domain resource 1, and a time domain resource position of the WUS sequence 1 corresponding to the paging control manner 2 is a time domain resource 2. In this case, the WUS sequence corresponding to the paging control manner 1 and the paging control manner 2 has different resource positions. For one terminal device, the access network device may notify the terminal device of the mapping relationship. Therefore, after detecting the WUS sequence, one terminal device may determine, based on a detection result of the WUS sequence and the mapping relationship, whether the terminal device is paged in a current PO.

Alternatively, if the paging control information is DCI, the different paging control information may mean different information about sub-mapping relationships included in the DCI, or different radio network temporary identities (radio network temporary identities, RNTIs) used to scramble the DCI.

In a first implementation, different DCI means the different information about sub-mapping relationships included in the DCI, or different group information included in the DCI. The groups herein are groups in the second grouping manner. The group information included in the DCI may include a bitmap (bitmap), or may include a group identifier (for example, an ID of the group), or may include the bitmap and the group identifier. For example, if the group information includes the bitmap, the DCI may include a first bitmap. The first bitmap may include one or more bits, and each bit corresponds to one or more groups in the second grouping manner. If a value of one bit in the first bitmap is a first value, it indicates that one or more groups corresponding to the bit are paged, in other words, it indicates that terminal devices included in the one or more groups corresponding to the bit are paged. If a value of one bit in the first bitmap is a second value, it indicates that one or more groups corresponding to the bit are not paged, in other words, it indicates that corresponding terminal devices included in the one or more groups corresponding to the bit are not paged. The first value is, for example, "1", and the second value is, for example, "0"; or the first value is "0", and the second value is "1". A plurality of groups may be indicated by the bitmap, and an indication manner is clear.

In this embodiment of this application, the first bitmap may be carried by a reserved (reserved) bit included in the DCI. Alternatively, the first bitmap may be carried by a bit that is included in the DCI and that is used to carry other information. Alternatively, a new field (field) may be added to the DCI, and the first bitmap is carried by the newly added field.

For example, the first bitmap is carried by the bit that is included in the DCI and that is used to carry other information. For example, the other information described herein is a short message (short message), or may also be other information other than the short message. Herein, the short message is used as an example.

The DCI includes the short message. A field used to carry the short message has eight bits in total. For meanings corresponding to statuses of the eight bits, refer to Table 2.

**Table** 2

| bit | short message |
|-----|---------------|
| 1 | System information modification indication (systemInfoModification)<br>If set to 1: indication of a broadcast control channel (Broadcast Control Channel) modification other than SIB6, SIB7 and SIB8<br>(If set to 1: indication of a BCCH modification other than SIB6, SIB7 and SIB8) |
| 2 | Earthquake and tsunami warning system (earthquake and tsunami warning system, ETWS) information and commercial mobile alert service (commercial mobile alert service, CMAS) indication (etwsAndCmasIndication)<br>If set to 1: indication of an ETWS primary notification and/or an ETWS secondary notification and/or a CMAS notification<br>(If set to 1: indication of an ETWS primary notification and/or an ETWS secondary notification and/or a CMAS notification) |

(continued)

| bit | short message |
|---|---|
| 3 to 8 | Not used in this release of the specification, and shall be ignored by UE if received (Not used in this release of the specification, and shall be ignored by UE if received) |

It can be learned from Table 2 that, in the eight bits, the bit 1 and the bit 2 have corresponding meanings, and the bit 3 to the bit 8 are currently reserved bits and have no specific meaning. Therefore, in this embodiment of this application, one or more of the bit 3 to the bit 8 may be used as the first bitmap. For example, if the six bits are used to carry the first bitmap, the first bitmap includes six bits, and each of the six bits may indicate one or more groups in the second grouping manner. For example, a first value is "1", a second value is "0", and N = 8. The six bits are in order from a most significant bit to a least significant bit. The bit 1 indicates a group 1 and a group 2, the bit 2 indicates a group 3, the bit 3 indicates a group 4, the bit 4 indicates a group 5, a group 6, and a group 7, the bit 5 indicates a group 7, and the bit 6 indicates a group 8. In this case, if a value of the six bits is "101000", it indicates that a terminal device corresponding to the group 1, the group 2, or the group 4 is paged, and a terminal device corresponding to the group 3, the group 5, the group 6, the group 7, or the group 8 is not paged.

For one terminal device, the access network device may notify the terminal device of the mapping relationship. For example, the access network device may broadcast the mapping relationship. Therefore, after one terminal device receives DCI, for example, a value of the six bits included in the DCI is "101000", and the terminal device corresponds to the group 1, the group 2, or the group 4 in the second grouping manner, the terminal device may determine that the terminal device is paged, and the terminal device may continue to monitor paging information in a current PO. If the terminal device corresponds to the group 3, the group 5, the group 6, the group 7, or the group 8 in the second grouping manner, the terminal device determines that the terminal device is not paged, and the terminal device does not need to monitor paging information in a current PO, but may monitor DCI when a next PO arrives.

Alternatively, the group information included in the DCI may include a group identifier. In this embodiment of this application, the group identifier may be carried by a reserved bit included in the DCI. Alternatively, the group identifier may be carried by a bit that is included in the DCI and that is used to carry other information. Alternatively, a new field may be added to the DCI, and the group identifier is carried by the newly added field.

For example, the group identifier is carried by the bit that is included in the DCI and that is used to carry other information. For example, the other information described herein is a short message, or may also be other information other than the short message. For example, the group identifier is carried by a bit that is used to carry the short message and that is included in the DCI. In this case, one or more of the bit 3 to the bit 8 in the eight bits that are used to carry the short message and that are described above may also be used to carry the group identifier. For example, if one group identifier occupies K bits, K bits in the six bits may be fixedly occupied to carry the group identifier. K is an integer greater than or equal to 1 and less than or equal to 6. K = 4 is used as an example. For example, the bit 3 to the bit 6 in the eight bits may be fixedly occupied to carry the group identifier. If values of the four bits are different, the four bits correspond to different group identifiers. For another example, if K = 6, different values of the four bits correspond to different group identifiers.

For one terminal device, the access network device may notify the terminal device of the mapping relationship. For example, the access network device may broadcast the mapping relationship. Therefore, after receiving the DCI, one terminal device may determine, based on a value of a bit that is in the six bits included in the DCI and that is used to indicate a group identifier, and a group to which the terminal device belongs in the second grouping manner, whether the terminal device is paged in a current PO.

In a second implementation, different DCI means different RNTIs used to scramble the DCI. For example, a paging control manner 1 corresponds to an RNTI 1, a paging control manner 2 corresponds to an RNTI 2, and the RNTI 1 and the RNTI 2 are different RNTIs.

For one terminal device, the access network device may notify the terminal device of the mapping relationship. For example, the access network device may broadcast the mapping relationship. Therefore, when one terminal device detects DCI, if the DCI is successfully detected by an RNTI corresponding to a group to which the terminal device belongs in the second grouping manner, the terminal device determines that the terminal device is paged in a current PO; or if the DCI fails to be detected by an RNTI corresponding to a group to which the terminal device belongs in the second grouping manner, the terminal device determines that the terminal device is not paged in a current PO.

The M groups may be completely the same as the N groups, in other words, M = N, and the M groups are the N groups. For example, the first parameter is the paging probability parameter, and the second parameter is also the paging probability parameter. A classification criterion corresponding to the M groups is the paging probability range, a classification criterion corresponding to the N groups is also the paging probability range, and M = N = 3. The M groups include a group 1 corresponding to a high probability, a group 2 corresponding to a medium probability, and a group 3 corresponding to a low probability. The N groups also include a group 1 corresponding to a high probability, a group 2 corresponding to a medium probability, and a group 3 corresponding to a low probability. In this case, it may be considered that the access network device establishes the mapping relationship between the M groups and the N groups, or it may be considered that the access network device does not need to establish the mapping relationship between the M groups and the N groups, which is equivalent to that the access network device may determine a corresponding paging manner based on a group corresponding to the first grouping manner.

Alternatively, the M groups are different from the N groups. For example, if M is not equal to N, or the classification criterion of the M groups is different from the classification criterion of the N groups, it may be considered that the M groups are different from the N groups.

For example, the first parameter is the paging probability parameter, and the second parameter is also the paging probability parameter. However, a classification criterion corresponding to the M groups is the paging probability range, and a classification criterion corresponding to the N groups is the probability value. For example, the M groups include a group 0 corresponding to a high probability, a group 1 corresponding to a medium probability, and a group 2 corresponding to a low probability. The N groups include a group a corresponding to a probability value range [80%, 100%], a group b corresponding to a probability value range [60%, 80%), a group c corresponding to a probability value range [40%, 60%), a group d corresponding to a probability value range [20%, 40%), and a group e corresponding to a probability value range [0, 20%). For example, the access network device maps the group 0 to the corresponding group a and the corresponding group b, maps the group 1 to the corresponding group c and the corresponding group d, and maps the group 2 to the corresponding group e. Table 3 is an example of a mapping relationship.

**Table 3**

| First grouping manner | Second grouping manner | Paging manner |
|---|---|---|
| Group 0 | Group a | Paging manner 1 |
| | Group b | Paging manner 2 |
| Group 1 | Group c | Paging manner 3 |
| | Group d | Paging manner 4 |
| Group 2 | Group e | Paging manner 5 |

For example, in Table 3, the group 1-group a is a sub-mapping relationship, corresponding to the paging manner 1, in other words, the group a corresponds to the paging manner 1. The group 1-group b is another sub-mapping relationship, corresponding to the paging manner 2, in other words, the group b corresponds to the paging manner 1. The rest can be deduced by analogy. For example, if one terminal device belongs to the group 0 (in other words, an ID mod 4 of the terminal device is 0) in the first grouping manner, and belongs to the group a in the second grouping manner, the terminal device needs to monitor the paging control information in the paging manner 1. Alternatively, if the terminal device belongs to the group 0 in the first grouping manner and belongs to the group b in the second grouping manner, the terminal device needs to monitor the paging control information in the paging manner 2.

For another example, the first parameter is the paging probability parameter, and the second parameter is also the paging probability parameter. However, a classification criterion corresponding to the M groups is the probability value, and a classification criterion corresponding to the N groups is the paging probability range. For example, the N groups include a group 0 corresponding to a high probability, and a group 1 corresponding to a low probability. The M groups include a group a corresponding to a probability value range [80%, 100%], a group b corresponding to a probability value range [60%, 80%), a group c corresponding to a probability value range [40%, 60%), a group d corresponding to a probability value range [20%, 40%), and a group e corresponding to a probability value range [0, 20%). For example, the access network device maps the group a, the group b, and the group c to the corresponding group 0, and maps the group d and the group e to the corresponding group 1. Table 4 is an example of a mapping relationship.

**Table 4**

| First grouping manner | Second grouping manner | Paging manner |
|---|---|---|
| Group a | Group 0 | Paging manner 1 |
| Group b | | |
| Group c | | |
| Group d | Group 1 | Paging manner 2 |
| Group e | | |

For example, in Table 4, the group a-group 0 is a sub-mapping relationship, corresponding to the paging manner 1, in other words, the group 0 corresponds to the paging manner 1. The group b-group 0 is another sub-mapping relationship, also corresponding to the paging manner 1, in other words, the group 0 corresponds to the paging manner 1. The rest can be deduced by analogy. For example, if one terminal device belongs to the group a in the first grouping manner, and belongs to the group 0 in the second grouping manner (in other words, an ID mod 4 of the terminal device is 0), the terminal device needs to monitor the paging control information in the paging manner 1.

For another example, the first parameter is the service parameter, and the second parameter is the ID of the terminal device. For example, the M groups include a group a corresponding to the uplink service trigger type and a group b corresponding to the downlink service trigger type. The N groups include: a group 0 corresponding to an ID range 1 of the terminal device, a group 1 corresponding to an ID range 1 of the terminal device, a group 2 corresponding to an ID range 1 of the terminal device, and a group 3 corresponding to an ID range 1 of the terminal device. The ID of the terminal device cannot directly indicate a service feature of the terminal device. Therefore, when setting a mapping relationship, the access network device may establish a sub-mapping relationship between the group a and the group 0, a sub-mapping relationship between the group a and the group 1, a sub-mapping relationship between the group a and the group 2, and a sub-mapping relationship between the group a and the group 3. The access network device may further establish a sub-mapping relationship between the group b and the group 0, a sub-mapping relationship between the group b and the group 1, a sub-mapping relationship between the group b and the group 2, and a sub-mapping relationship between the group b and the group 3. Table 5 is an example of the mapping relationship.

**Table 5**

| First grouping manner | Second grouping manner | Paging manner |
|---|---|---|
| Group a | Group 0 | Paging manner 1 |
| | Group 1 | Paging manner 2 |
| | Group 2 | Paging manner 3 |
| | Group 3 | Paging manner 4 |
| Group b | Group 0 | Paging manner 5 |
| | Group 1 | Paging manner 6 |
| | Group 2 | Paging manner 7 |
| | Group 3 | Paging manner 8 |

For example, in Table 5, although the group 0 corresponds to the group a and the group b, the group 0 corresponding to the group a and the group 0 corresponding to the group b may also be considered as different groups. Therefore, in the second grouping manner shown in Table 5, it may be considered that there are eight groups. The group a-group 0 is a sub-mapping relationship, corresponding to the paging manner 1, in other words, the group 0 corresponds to the paging manner 1 when the group 0 corresponds to the group a. The group b-group 0 is another sub-mapping relationship, corresponding to the paging manner 5, in other words, the group 0 corresponds to the paging manner 5 when the group 0 corresponds to the group b. The rest can be deduced by analogy. For example, if one terminal device belongs to the group a in the first grouping manner, and belongs to the group 0 in the second grouping manner (in other words, an ID mod 4 of the terminal device is 0), the terminal device needs to monitor the paging control information in the paging manner 1. Alternatively, if one terminal device belongs to the group b in the first grouping manner, and belongs to the group 2 in the second grouping manner (in other words, an ID mod 4 of the terminal device is 2), the terminal device needs to monitor the paging control information in the paging manner 7.

The foregoing several mapping relationships are only examples of the mapping relationships. The mapping relationship that is between the M groups and the N groups and that is set by the access network device is not limited in this embodiment of this application. In addition, in the foregoing mapping relationship, an example in which the mapping relationship includes information about a corresponding paging manner is used. In an actual application, a paging manner corresponding to each group in the second grouping manner may also be specified in a protocol, or may be preconfigured on the terminal device. In this case, the mapping relationship only needs to include a mapping relationship between the first grouping manner and the second grouping manner, and does not need to include information about the paging manner corresponding to each group in the second grouping manner.

In this embodiment of this application, the access network device may not be limited to grouping performed by the core network device, but may set new groups, provided that a mapping relationship between the two grouping manners is established. This imposes fewer restrictions on the access network device. In addition, if the core network device performs grouping at a fine granularity, for example, the core network device performs grouping based on a probability value corresponding to a paging probability parameter and at a granularity of 5%, the core network device may classify the terminal devices into 20 groups. If the access network device does not set the new groups, paging manners need to be separately configured for the 20 groups. The access network device may not support so many paging manners. In this embodiment of this application, the access network device may further perform grouping in a second grouping manner. For example, the access network device also performs grouping based on the probability value corresponding to the paging probability parameter but at a granularity of 25%. In this case, the core network device may classify the terminal devices into four groups, and the access network device may establish the mapping relationship between the two grouping manners. Therefore, the access network device only needs to support a small quantity of paging manners to complete paging, which is flexible. In addition, the access network device may determine a corresponding paging manner for a terminal device included in each group classified by the core network device.

Alternatively, the mapping relationship may not be set by the access network device. For example, the mapping relationship may be specified in a protocol, or may be preconfigured on the access network device. In this case, the access network device does not need to perform S504 and S505. It can be learned that S504 and S505 are optional steps, and are not necessarily performed. S504 and S505 are indicated by dashed lines in FIG. 5A and FIG. 5B.

S506: The access network device sends the mapping relationship.

For example, the access network device may send the mapping relationship through a broadcast message, so that a plurality of terminal devices can receive the mapping relationship. The broadcast message is a system message, or may be another message. Alternatively, the access network device may send the mapping relationship to the terminal device by using a unicast message. For example, the access network device sends the mapping relationship only to a terminal device having an energy saving requirement. The unicast message is, for example, a higher layer message, for example, an RRC message or a media access control (media access control, MAC) control element (control element, CE), or may be a physical layer message, for example, DCI. FIG. 5A and FIG. 5B show an example in which the first terminal device receives the mapping relationship.

For example, if the mapping relationship includes the mapping relationship (or a sub-mapping relationship) between the first group and the second group, the broadcast message may include the identifier of the first group and the identifier of the second group corresponding to the first group, and a terminal device that receives the broadcast message may determine the mapping relationship between the first group and the second group. Optionally, if the mapping relationship includes information about a paging manner, the broadcast message may further include information about a paging manner (for example, the first paging manner) corresponding to the second group. For example, if the first paging manner is a paging manner scrambled by using an RNTI corresponding to the second group, the broadcast message may indicate the RNTI. However, if information about a paging manner corresponding to each group in the second grouping manner is specified in a protocol, the broadcast message may not include information about the paging manner corresponding to the second group. If the mapping relationship further includes another sub-mapping relationship, a manner in which the access network device sends each sub-mapping relationship is similar.

Certainly, if the mapping relationship is specified in a protocol, the access network device may not need to send the mapping relationship, in other words, S506 does not need to be performed. Therefore, S506 is an optional step, and is not necessarily performed. S506 is indicated by a dashed line in FIG. 5A and FIG. 5B 5.

S507: The first terminal device determines. based on the first information, that the first terminal device belongs to the second group, or determines a paging manner corresponding to the first terminal device.

The first information may be the information about the first group, or the first information indicates that the first terminal device belongs to the first group; or the first information does not include information about any group. If the first information is the information about the first group, the first terminal device receives the information about the first group received from the core network device in S503, or the first terminal device determines the information about the first group. If the first information does not include the information about any group, it indicates that the first terminal device does not belong to any group in the first grouping manner. For example, the core network device does not send the information about the first group to the first terminal device, and the first terminal device does not determine the information about the first group. In this case, it may be actually considered that there is no first information. In other words, it may be considered that if the first terminal device does not obtain the information about the first group, which may also be considered that the first information implicitly exists, it indicates that the first terminal device does not correspond to any group in the first grouping manner.

If the first information is the information about the first group, and the first terminal device receives the information about the first group received from the core network device and receives the mapping relationship, the first terminal device may determine a specific group to which the first terminal device corresponds in the second grouping manner. For example, if the first terminal device determines that the first group corresponds to the second group in the mapping relationship (or the first terminal device determines the second group based on the mapping relationship between the first group and the second group), the first terminal device determines that the first terminal device corresponds to the second group, or the first terminal device determines that the first terminal device corresponds to the paging manner corresponding to the second group. Alternatively, the first terminal device determines that the first group does not correspond to any group in the second grouping manner in the mapping relationship. For example, if there is no first group in the first grouping manner, the mapping relationship does not include the group corresponding to the first group. In this case, the first terminal device may also determine that the first terminal device corresponds to the second group, or in other words, the first terminal device determines that the first terminal device corresponds to the paging manner corresponding to the second group. For example, the second group is a first default group. The first default group may be understood as that all terminal devices that cannot correspond to the mapping relationship belong to the first default group. The first default group may correspond to a default paging manner, or may be referred to as a default (default) paging manner. Alternatively, the first terminal device may determine, based on the second parameter, the group to which the first terminal device belongs. To be specific, although there is no group corresponding to the first group in the mapping relationship, the first terminal device may still determine a group to which the first terminal device belongs in the second grouping manner, for example, the first terminal device determines, based on the second parameter, that the first terminal device belongs to the second group, so that the first terminal device can monitor paging control information in a paging manner corresponding to the second group.

It is equivalent to that, in an actual application, because the negotiation process for grouping between the terminal devices and the core network device is transparent to the access network device, it is possible that the F groups classified by the core network device do not completely correspond to the M groups classified by the access network device. For example, the core network device performs grouping based on a paging probability range corresponding to the paging probability parameter, and the access network device performs grouping based on the paging probability range corresponding to the paging probability parameter. The core network device classifies the terminal devices into three groups: a high probability, a medium probability, and a low probability. However, the access network device classifies the terminal devices into only two groups: a high probability and a low probability. In this case, if the information about the first group indicates that the first terminal device belongs to the medium probability, the first terminal device determines that the first group does not correspond to any group in the second grouping manner in the mapping relationship, Alternatively, a grouping manner of the core network device may be different from a grouping manner (the first grouping manner) of the access network device. For example, the core network device performs grouping based on the paging probability parameter, but the first grouping manner used by the access network device is a grouping manner based on the service parameter. In this case, the first terminal device also determines that the first group does not correspond to any group in the second grouping manner in the mapping relationship. Therefore, a backoff mechanism is set in this embodiment of this application, so that the terminal device can be paged even if the grouping manner of the core network device does not completely correspond to the grouping manner of the access network device. In this way, a paging scope can be expanded, to improve a paging success rate.

If the first information does not include the information about any group, in other words, there is no information about the group to which the first terminal device belongs. In this case, it may also be considered that the first terminal device belongs to the first group in the first grouping manner. The first group is different from the foregoing first group. In this case, there is actually no first group. In other words, a terminal device that does not belong to any group in the first grouping manner may be considered as belonging to the first group. The first group may also be considered as a default group. For example, the first group is referred to as a second default group. The first group is not a group in the first grouping manner. In this case, the first terminal device may also determine that the first terminal device corresponds to the second group, or in other words, the first terminal device determines that the first terminal device corresponds to the paging manner corresponding to the second group. Alternatively, if the first information does not include the information about any group, in other words, there is no information about the group to which the first terminal device belongs. In this case, a process of determining that the first terminal device belongs to the first group may not be performed. Instead, if the first information does not include the information about any group, in other words, there is no information about the group to which the first terminal device belongs, it may be determined that the first terminal device corresponds to the second group. For example, the second group is the first default group. Alternatively, the first terminal device may determine, based on the second parameter, the group to which the first terminal device belongs. For example, the first terminal device determines, based on the second parameter, that the first terminal device belongs to the second group. For details, refer to the foregoing description.

This is actually equivalent to a backoff manner. To be specific, if a paging manner corresponding to one terminal device cannot be determined in the mapping relationship, another paging manner may also be re-determined for the terminal device, so that the terminal device can be paged. In this way, a paging scope can be expanded, to improve a paging success rate.

In addition, if the first parameter and the second parameter are different parameters, for example, the first parameter is the paging probability parameter or the service parameter, and the second parameter is the ID of the terminal device, that the first terminal device determines, based on the first information, that the first terminal device corresponds to the second group in the second grouping manner may be specifically: The first terminal device determines, based on the first information, a value of a second parameter corresponding to the first terminal device, and the mapping relationship between the first grouping manner and the second grouping manner, that the first terminal device corresponds to the second group in the second grouping manner. For example, refer to Table 5 above. The first terminal device belongs to the group a in the first grouping manner, and the first terminal device determines, based on the ID of the first terminal device, that the first terminal device belongs to the group 0 in the second grouping manner. In this case, the first terminal device may determine that the first terminal device corresponds to the group 0 in the group a-group 0 in the second grouping manner, to determine that the group 0 corresponds to the paging manner 1.

S508: The core network device obtains paging information of the first terminal device.

The paging information includes, for example, information such as an identifier of the first terminal device, for example, the ID of the first terminal device. Certainly, the paging information may further include paging-related information.

S508 is an optional step, and is indicated by a dashed line in FIG. 5A and FIG. 5B.

S509: The core network device determines, based on the identifier of the first terminal device, that the first terminal device belongs to the first group in the first grouping manner. Alternatively, the core network device may not determine the group to which the first terminal device belongs in the first grouping manner. In this case, S509 may not be performed. Therefore, S509 is an optional step, and is indicated by a dashed line in FIG. 5A and FIG. 5B. Alternatively, the core network device may determine that the first terminal device does not belong to any group in the first grouping manner (in other words, the core network device may determine that the first terminal device does not belong to any group). In S509, an example in which the core network device determines that the first terminal device belongs to the first group in the first grouping manner or determines that the first terminal device does not belong to any group in the first grouping manner is used.

Because the core network device determines terminal devices included in each of the M groups, after learning of the identifier of the first terminal device, the core network device may determine a group to which the identifier belongs. For example, if the core network device determines that the first terminal device belongs to the first group in the M groups, the core network device may determine the information about the first group.

S510: The core network device sends first paging information to the access network device, and the access network device receives the first paging information from the core network device. The first paging information may include the identifier of the first terminal device.

Optionally, the first paging information may further indicate a first group to which the first terminal device belongs. The first paging information indicates that information about the first group may include different cases. For example, in a case, the first paging information includes the information about the first group. In this case, the first group is a group in the first grouping manner. For example, if the core network device determines that the first terminal device belongs to the first group in the first grouping manner in S509, the core network device may include information about the first group in the first paging information. For another example, in another case, the first paging information does not include the information about the group to which the first terminal device belongs. In this case, the first group is considered as a default group (for example, the second default group described above). To be specific, a terminal device that does not belong to any group in the first grouping manner may be considered to belong to the first group. For example, if the core network device does not determine a group to which the first terminal device belongs in the first grouping manner in S509, or the core network device determines that the first terminal device does not belong to any group in the first grouping manner, the first paging information does not include the information about the group to which the first terminal device belongs.

Alternatively, if the first paging information does not include the information about the group to which the first terminal device belongs, it may also be considered that the first paging information does not indicate the group to which the first terminal device belongs, or the first paging information does not include the information about the group to which the first terminal device belongs.

S511: The access network device determines the second group. In other words, the access network device determines that the first terminal device belongs to the second group.

For example, if the first paging information includes the information about the first group, and the mapping relationship between the first grouping manner and the second grouping manner includes the information about the first group, the access network device may determine the second group corresponding to the first group in the mapping relationship, to be specific, determine that the first terminal device corresponds to the second group in the second grouping manner.

For another example, if the first paging information includes the information about the first group, and the mapping relationship between the first grouping manner and the second grouping manner does not include the information about the first group, the access network device may determine the second group corresponding to the first group. For example, the second group is the first default group. The first default group may be understood as that all terminal devices that cannot correspond to the mapping relationship belong to the first default group. The first default group may correspond to a default paging manner, or may be referred to as a default paging manner. Alternatively, the access network device may determine. based on the second parameter, the group to which the first terminal device belongs. To be specific, although there is no group corresponding to the first group in the mapping relationship, the access network device may still determine a group to which the first terminal device belongs in the second grouping manner, for example, the access network device determines, based on the second parameter, that the first terminal device belongs to the second group, so that the access network device can monitor paging control information in a paging manner corresponding to the second group.

For another example, if the first paging information does not include information about the group to which the first terminal device belongs in the first grouping manner, it may also be considered that the first terminal device belongs to the first group in the first grouping manner. In this case, the access network device may also determine that the first terminal device corresponds to the second group. Alternatively, if the first paging information does not include information about the group to which the first terminal device belongs in the first grouping manner, the access network device may determine that the first terminal device corresponds to the second group without determining that the first terminal device corresponds to the first group. In other words, the access network device does not need to determine that the first terminal device corresponds to the first group, and may determine that the first terminal device corresponds to the second group. For example, the second group is the first default group. Alternatively, the access network device may determine. based on the second parameter, the group to which the first terminal device belongs. For example, the access network device determines, based on the second parameter, that the first terminal device belongs to the second group. For details, refer to the foregoing description.

Certainly, if the first paging information includes the information about the first group, and the mapping relationship between the first grouping manner and the second grouping manner does not include the information about the first group, or the first paging information does not include the information about the group to which the first terminal device belongs in the first grouping manner, a manner in which the access network device determines the group to which the first terminal device belongs should be consistent with a manner in which the first terminal device determines the group to which the first terminal device belongs. For example, the access network device and the first terminal device determine that a second group to which the first terminal device belongs is the first default group. Alternatively, the access network device and the first terminal device determine, based on the second parameter, the group to which the first terminal device belongs. In this case, determining results of the access network device and the first terminal device may be consistent, and a paging success rate can be improved.

S512: The access network device pages the first terminal device in the first paging manner corresponding to the second group, and the first terminal device also monitors the first paging control information in the first paging manner corresponding to the second group.

For example, the first paging manner corresponds to the first paging control information. In this case, the first terminal device can be paging in the first paging manner corresponding to the second group in the following way: The access network device sends the first paging control information, to page the first terminal device. Correspondingly, the first terminal device may monitor the first paging control information from the access network device. This example is shown in S512 in FIG. 5A and FIG. 5B. Certainly, if the access network device sends the first paging control information, all terminal devices corresponding to a group corresponding to the first paging control information in the second grouping manner should actually be paged. For example, the first paging control information corresponds to one or more groups in the second grouping manner, and the second group may be one of the groups. FIG. 5A and FIG. 5B only show an example in which the first terminal device monitors the first paging control information.

If the paging control information is a WUS sequence, for example, the first paging control information is a first WUS sequence corresponding to the second group, the access network device may send the first WUS sequence. The first terminal device monitors the first WUS sequence. If it is determined that the WUS sequence detected is the first WUS sequence, it indicates that the first terminal device is paged, and the first terminal device may continue to monitor the paging information in a current PO. If it is determined that the WUS sequence detected is not the first WUS sequence, it indicates that the first terminal device is not paged, and the first terminal device may not need to monitor the paging information in a current PO, so that power consumption is reduced.

Alternatively, if the paging control information is DCI, the different paging control information means different group information included in the DCI, and the group information is implemented by using the first bitmap. For example, if the first paging control information is first DCI, where the first DCI includes a first bitmap, and a value of a bit corresponding to the second group in the first bitmap is a first value, the access network device may send the first DCI. The first terminal device monitors the DCI. If it is determined that a value of a bit corresponds to the second group in a bitmap included in the DCI detected is the first value, it indicates that the first terminal device is paged, and the first terminal device may continue to monitor the paging information in a current PO. If it is determined that a value of a bit corresponds to the second group in a bitmap included in the DCI detected is not the first value, it indicates that the first terminal device is not paged, and the first terminal device may not need to monitor paging information in a current PO, so that power consumption is reduced.

Alternatively, if the paging control information is DCI, the different paging control information means different group information included in the DCI, and information about a sub-mapping relationship is a group identifier. For example, if the first paging control information is first DCI, where the first DCI includes the identifier of the second group, the access network device may send the first DCI. The first terminal device monitors the DCI. If it is determined that the DCI detected includes the identifier of the second group, it indicates that the first terminal device is paged, and the first terminal device may continue to monitor paging information in a current PO. If it is determined that the DCI detected does not include the identifier of the second group, for example, the DCI includes an identifier of another group or does not include any group identifier, it indicates that the first terminal device is not paged, and the first terminal device may not need to monitor paging information in a current PO, so that power consumption is reduced.

Alternatively, if the paging control information is DCI, the different paging control information means different RNTIs used to scramble the DCI. For example, the first paging control information is first DCI, the first DCI is scrambled by using a first RNTI corresponding to the second group, and the access network device may send the first DCI. The first terminal device monitors the DCI. If it is determined that the DCI detected is scrambled by using the first RNTI, it indicates that the first terminal device is paged, and the first terminal device may continue to monitor paging information in a current PO. If it is determined that the DCI detected is not scrambled by using the first RNTI, it indicates that the first terminal device is not paged, and the first terminal device may not need to monitor paging information in a current PO, so that power consumption is reduced.

S513: The first terminal device monitors the paging information.

If the first terminal device determines that the first terminal device is paged, the first terminal device may continue to monitor the paging information in a current PO. If the first terminal device determines that the first terminal device is not paged, the first terminal device does not need to monitor the paging information in a current PO, in other words, the first terminal device does not need to perform S513. Instead, the first terminal device may continue to monitor the paging control information when a next PO arrives. The rest can be deduced by analogy. Therefore, S513 is an optional step, and is indicated by a dashed line in FIG. 5A and FIG. 5B.

In embodiments of this application, terminal devices are grouped. Different paging manners may be used for terminal devices in different groups. If one terminal device determines through monitoring that the paging manner is not a paging manner of a group to which the terminal device belongs, the terminal device may not need to monitor paging information or the like. In this way, power consumption of the terminal device and a false alarm probability can be reduced.

In addition, different paging manners correspond to different terminal device groups, and different terminal device groups correspond to different paging probabilities. For example, a terminal device with a higher paging probability belongs to one group, a terminal device with a lower paging probability belongs to another group, and the two groups correspond to different paging manners. In this case, a terminal device with a higher paging probability is paged for a large quantity of times. However, because a paging manner corresponding to this type of terminal device is different from a paging manner corresponding to a terminal device with a lower paging probability, the terminal device with a lower paging probability considers that the terminal device is not paged, and does not need to monitor the paging information. In this manner, a probability that the terminal device with a lower paging probability is disturbed is reduced, which helps reduce power consumption of this type of terminal device.

With reference to the accompanying drawings, the following describes apparatuses configured to implement the foregoing methods in embodiments of this application. Therefore, all the foregoing content may be used in the following embodiments. Repeated content is not described again.

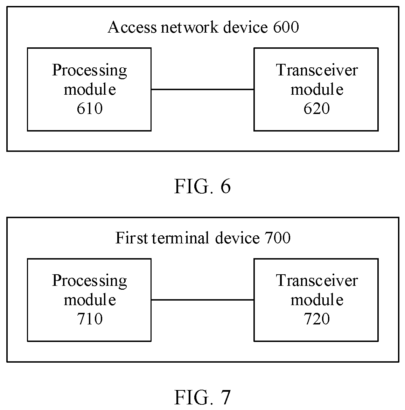

FIG. 6 is a schematic block diagram of a communication apparatus 600 according to an embodiment of this application. For example, the communication apparatus 600 is an access network device 600.

The access network device 600 includes a processing module 610. Optionally, the network device 600 may further include a transceiver module 620. For example, the access network device 600 may be an access network device, or may be a chip used in the access network device or another combined device or component that has a function of the access network device. When the access network device 600 is the access network device, the transceiver module 620 may be a transceiver, where the transceiver may include an antenna, a radio frequency circuit, and the like; the processing module 610 may be a processor (or a processing circuit), for example, a baseband processor, where the baseband processor may include one or more central processing units (central processing units, CPUs). When the access network device 600 is the component that has the function of the access network device, the transceiver module 620 may be a radio frequency unit. and the processing module 610 may be a processor (or a processing circuit), for example, a baseband processor. When the access network device 600 is the chip system, the transceiver module 620 may be an input/output interface of the chip (for example, a baseband chip), and the processing module 610 may be a processor (or a processing circuit) of the chip system, and may include one or more central processing units. It should be understood that the processing module 610 in this embodiment of this application may be implemented by a processor or a processor-related circuit component (or a processing circuit), and the transceiver module 620 may be implemented by a transceiver or a transceiver-related circuit component.

For example, the processing module 610 may be configured to perform all operations, except receiving and sending operations, performed by the access network device in the embodiment shown in FIG. 5A and FIG. 5B, for example, S504, S505, and S511, and/or configured to support another process of the technology described in this specification. The transceiver module 620 may be configured to perform all operations performed by the access network device in the embodiment shown in FIG. 5A and FIG. 5B, for example, S506, S510, and S512, and/or configured to support another process of the technology described in this specification.

In addition, the transceiver module 620 may be one functional module. The functional module can implement both a sending operation and a receiving operation. For example, the transceiver module 620 may be configured to perform all sending operations and receiving operations performed by the access network device in the embodiment shown in FIG. 2. For example, when a sending operation is performed, it may be considered that the transceiver module 620 is a sending module. When a receiving operation is performed, it may be considered that the transceiver module 620 is a receiving module. Alternatively, the transceiver module 620 may include two functional modules. The transceiver module 620 may be considered as a general term of the two functional modules, and the two functional modules are respectively a sending module and a receiving module. The sending module is configured to implement a sending operation. For example, the sending module may be configured to perform all sending operations performed by the access network device in any implementation of the embodiment shown in FIG. 2. The receiving module is configured to implement a receiving operation. For example, the receiving module may be configured to perform all receiving operations performed by the access network device in the embodiment shown in FIG. 2.

The transceiver module 620 is configured to receive first paging information from a core network device. The first paging information includes an identifier of a first terminal device, and the first paging information further indicates a first group to which the first terminal device belongs.

The processing module 610 is configured to determine a second group corresponding to the first group.

The transceiver module 620 is further configured to page the first terminal device in a first paging manner corresponding to the second group.

In an optional implementation, that the first paging information indicates a first group to which the first terminal device belongs includes:

the first paging information includes information about the first group; or
the first paging information does not include information about a group to which the first terminal device belongs.

In an optional implementation, the first paging information includes the information about the first group, and the processing module 610 is configured to determine the second group corresponding to the first group in the following manner:
determining the second group based on a mapping relationship between the first group and the second group.

In an optional implementation, the first paging information does not include the information about the first group, and the processing module 610 is configured to determine the second group corresponding to the first group in the following manner:

determining, based on the mapping relationship between the first group and the second group, that the first terminal device does not correspond to any group; and
determining the second group.

In an optional implementation,

the second group is a default group; or
the processing module 610 is configured to determine that the first group corresponds to the second group in the following manner: determining, based on a second parameter, that the first terminal device belongs to the second group.

In an optional implementation, the transceiver module 620 is configured to page the first terminal device in a first paging manner corresponding to the second group in the following manner:
sending first paging control information corresponding to the second group, to page the first terminal device.

In an optional implementation,

the first paging control information is a first WUS sequence corresponding to the second group; or
the first paging control information is first DCI, where the first DCI is scrambled by using a first RNTI corresponding to the second group; or
the first paging control information is first DCI, where the first DCI includes a first bitmap, and a value of a bit corresponding to the second group in the first bitmap is a first value; or
the first paging control information is first DCI, where the first DCI includes an identifier of the second group.

In an optional implementation, the transceiver module 620 is further configured to send a broadcast message. The broadcast message includes an identifier of the first group and the identifier of the second group corresponding to the first group.

In an optional implementation, the broadcast message further includes information about the first paging manner

corresponding to the second group.

Alternatively,

the transceiver module 620 is configured to receive first paging information from a core network device. The first paging information includes an identifier of a first terminal device.

The processing module 610 is configured to: if the first paging information does not include information about a group to which the first terminal device belongs, determining that the terminal device corresponds to a second group. The second group is a default group.

The transceiver module 620 is further configured to page the first terminal device in a first paging manner corresponding to the second group.

In an optional implementation, the processing module 610 is configured to determine that the terminal device corresponds to a second group in the following manner: determining, based on a second parameter, that the first terminal device belongs to the second group.

In an optional implementation, the transceiver module 620 is configured to page the first terminal device in a first paging manner corresponding to the second group in the following manner:

sending first paging control information corresponding to the second group, to page the first terminal device.

In an optional implementation,

the first paging control information is a first WUS sequence corresponding to the second group; or
the first paging control information is first DCI, where the first DCI is scrambled by using a first RNTI corresponding to the second group; or
the first paging control information is first DCI, where the first DCI includes a first bitmap, and a value of a bit corresponding to the second group in the first bitmap is a first value; or
the first paging control information is first DCI, where the first DCI includes an identifier of the second group.

In an optional implementation, the transceiver module 620 is further configured to send a broadcast message. The broadcast message includes an identifier of the first group and the identifier of the second group corresponding to the first group.

In an optional implementation, the broadcast message further includes information about the first paging manner corresponding to the second group.

For other functions that can be implemented by the access network device 600, refer to the related descriptions in the embodiment shown in FIG. 5A and FIG. 5B. Details are not described again.

FIG. 7 is a schematic block diagram of a communication apparatus 700 according to an embodiment of this application. For example, the communication apparatus 700 is a first terminal device 700.

The first terminal device 700 includes a processing module 710. Optionally, the first terminal device 700 may further include a transceiver module 720. For example, the first terminal device 700 may be a terminal device, or may be a chip used in the terminal device or another combined device or component that has a function of the first terminal device. When the first terminal device 700 is the terminal device, the transceiver module 720 may be a transceiver, where the transceiver may include an antenna, a radio frequency circuit, and the like; the processing module 710 may be a processor (or a processing circuit), for example, a baseband processor, where the baseband processor may include one or more CPUs. When the first terminal device 700 is the component that has the function of the first terminal device, the transceiver module 720 may be a radio frequency unit, and the processing module 710 may be a processor (or a processing circuit), for example, a baseband processor. When the first terminal device 700 is the chip system, the transceiver module 720 may be an input/output interface of the chip (for example, a baseband chip), and the processing module 710 may be a processor (or a processing circuit) of the chip system, and may include one or more central processing units. It should be understood that the processing module 710 in this embodiment of this application may be implemented by a processor or a processor-related circuit component (or referred to as a processing circuit), and the transceiver module 720 may be implemented by a transceiver or a transceiver-related circuit component.

For example, the processing module 710 may be configured to perform all operations, such as S507, that are performed by the first terminal device in the embodiment shown in FIG. 5A and FIG. 5B except sending and receiving operations, and/or configured to support another process of the technology described in this specification. The transceiver module 720 may be configured to perform all operations performed by the first terminal device in the embodiment shown in FIG. 5A and FIG. 5B, for example, S501, S503, S506, S512, and S513, and/or configured to support another process of the technology described in this specification.

In addition, for an implementation of the transceiver module 720, refer to descriptions of the implementation of the transceiver module 620.

The processing module 710 is configured to: determine, based on first information indicating that a first terminal device belongs to a first group, a second group corresponding to the first group that corresponds to the first terminal device.

The transceiver module 720 is configured to monitor first paging control information in a first paging manner corresponding to the second group.

In an optional implementation, the first information is information about the first group, and the processing module 710 is configured to determine, based on the information about the first group, the second group corresponding to the first group that corresponds to the first terminal device in the following manner:

determining the second group based on a mapping relationship between the first group and the second group.

In an optional implementation, the first information does not include any group information, and the processing module 710 is configured to determine, based on the information about the first group, the second group corresponding to the first group that corresponds to the first terminal device in the following manner:

determining that the first terminal device 700 does not correspond to any group in the mapping relationship between the first group and the second group; and

determining that the first group corresponds to the second group.

In an optional implementation,

the second group is a default group; or

the processing module 710 is configured to determine that the first group corresponds to the second group in the following manner: determining, based on a second parameter, that the first terminal device 700 belongs to the second group.

In an optional implementation, the transceiver module 720 is configured to monitor first paging control information in a first paging manner corresponding to the second group in the following manner:

monitoring a first WUS sequence corresponding to the second group; or

monitoring first DCI including a first RNTI, where **the** first RNTI corresponds to the second group; or

monitoring first DCI including a first **bitmap,** where a value of a bit corresponding to the second group in the first bitmap is a first value; or

monitoring first DCI that includes an identifier of the second group.

In an optional implementation, the transceiver module 720 is further configured to monitor paging information based on the first paging control information.

Alternatively,

the processing module 710 is configured to: if there is no information about a group to which a first terminal device 700 belongs, determining that the first terminal device 700 corresponds to a second group. The second group is a default group.

The transceiver module 720 is configured to monitor first paging control information in a first paging manner corresponding to the second group.

In an optional implementation, the processing module 710 is configured to determine that the first terminal device 700 corresponds to a second group in the following manner: determining, based on a second parameter, that the first terminal device 700 belongs to the second group.

In an optional implementation, the transceiver module 720 is configured to monitor first paging control information in a first paging manner corresponding to the second group in the following manner:

monitoring a first WUS sequence corresponding to the second group; or

according to the invention :

monitoring first DCI including a first RNTI, where the first RNTI corresponds to the second group; or

monitoring first DCI including a first bitmap, where a value of a bit corresponding to the second group in the first bitmap is a first value; or

monitoring first DCI that includes an identifier of the second group.

In an optional implementation, the transceiver module 720 is further configured to monitor paging information based on the first paging control information.

For other functions that can be implemented by the first terminal device 700, refer to the related descriptions in the embodiment shown in FIG. 5A and FIG. 5B. Details are not described again.

An embodiment of this application further provides a communication apparatus. The communication apparatus may be a terminal device, or may be a circuit. The communication apparatus may be configured to perform an action performed by the first terminal device in the foregoing method embodiment.

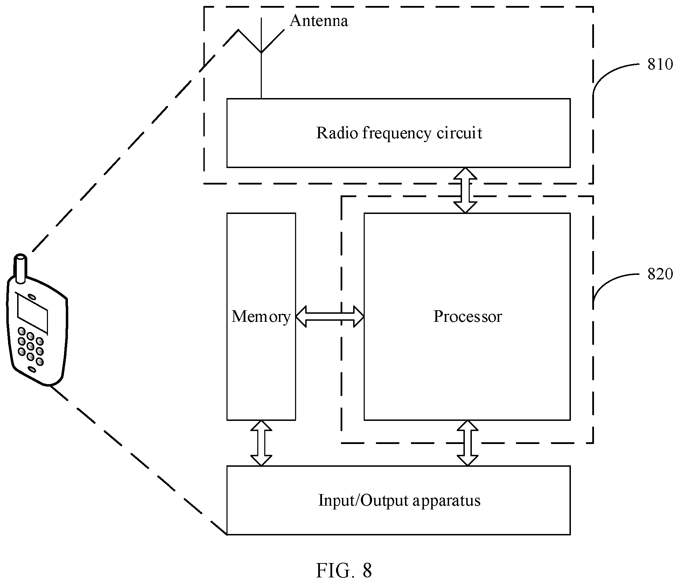

When the communication apparatus is the first terminal device, FIG. 8 is a simplified schematic diagram of a structure of the terminal device. For ease of understanding and convenience of figure illustration, FIG. 8 shows an example in which the terminal device is a mobile phone. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program. and the like. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus such as a touchscreen, a display, or a keyboard is mainly configured to receive data entered by a user, and output data to the user. It should be noted that some types of terminal devices may have no input/output apparatus.

When data needs to be sent, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 8. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device (the transceiver unit may be one functional unit, and the functional unit can implement a sending function and a receiving function; or the transceiver unit may include two functional units: a receiving unit that can implement a receiving function and a sending unit that can implement a sending function), and the processor that has a processing function may be considered as a processing unit of the terminal device. As shown in FIG. 8, the terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. To be specific, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 810 is configured to perform a sending operation and a receiving operation on a first terminal device in the foregoing method embodiments, and the processing unit 820 is configured to perform an operation other than the receiving/sending operation of the first terminal device in the foregoing method embodiments.

For example, in an implementation, the processing unit 810 may be configured to perform all operations, such as S507, that are performed by the first terminal device in the embodiment shown in FIG. 5A and FIG. 5B except sending and receiving operations, and/or configured to support another process of the technology described in this specification. The transceiver unit 820 may be configured to perform all operations performed by the first terminal device in the embodiment shown in FIG. 5A and FIG. 5B, for example, S501, S503, S506, S512, and S513, and/or configured to support another process of the technology described in this specification.

When the communication apparatus is a chip apparatus or circuit, the apparatus may include the transceiver unit and the processing unit. The transceiver unit may be an input/output circuit and/or a communication interface. The processing unit is an integrated processor, a microprocessor, or an integrated circuit.

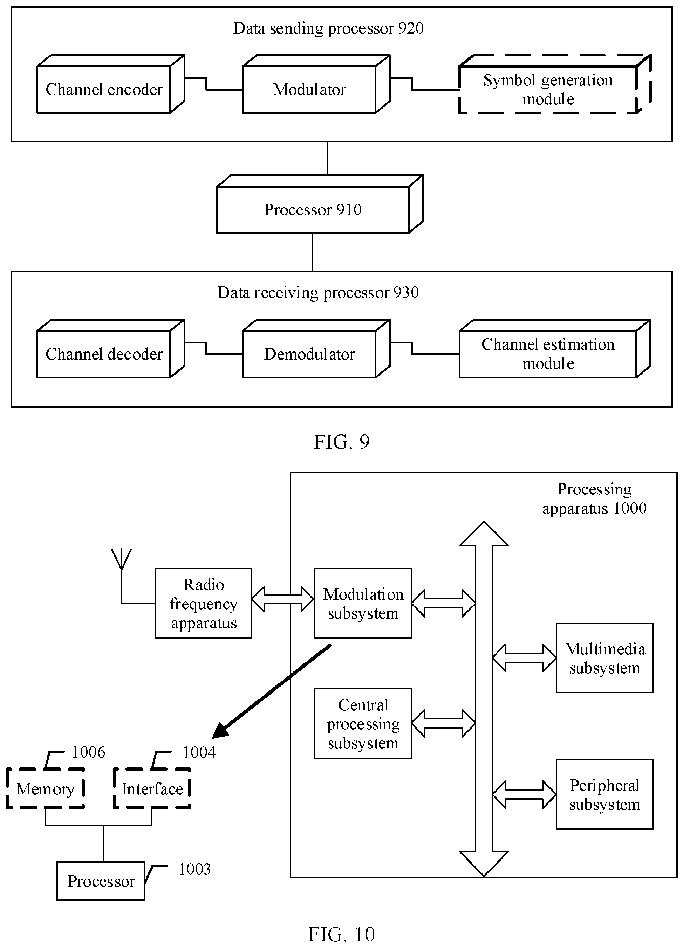

When the communication apparatus in this embodiment is a terminal device, reference may be made to a device shown in FIG. 9. In an example, the device may implement a function similar to that of the processing module 710 in FIG. 7. In FIG. 9, the device includes a processor 910, a data sending processor 920, and a data receiving processor 930. The processing module 710 in the foregoing embodiment may be the processor 910 in FIG. 9, and implement a corresponding function. The transceiver module 720 in the foregoing embodiment may be the data sending processor 920 and/or the data receiving processor 930 in FIG. 9, and implement a corresponding function. Although a channel encoder and a channel decoder are shown in FIG. 9, it may be understood that these modules are not intended to constitute limitative description of this embodiment and are merely examples.

FIG. 10 shows another form of this embodiment. A processing apparatus 1000 includes modules such as a modulation subsystem, a central processing subsystem, and a peripheral subsystem. The communication apparatus in this embodiment may be used as the modulation subsystem. Specifically, the modulation subsystem may include a processor 1003 and an interface 1004. The processor 1003 completes a function of the foregoing processing module 710, and the interface 1004 completes a function of the foregoing transceiver module 720. In another variant, the modulation subsystem includes a memory 1006, a processor 1003, and a program that is stored in the memory 1006 and that can run on the processor. When executing the program, the processor 1003 implements the method on the terminal device in the foregoing method embodiments. It should be noted that the memory 1006 may be non-volatile or volatile. The memory 1006 may be located in the modulation subsystem, or may be located in the processing apparatus 1000, provided that the memory 1006 can be connected to the processor 1003.

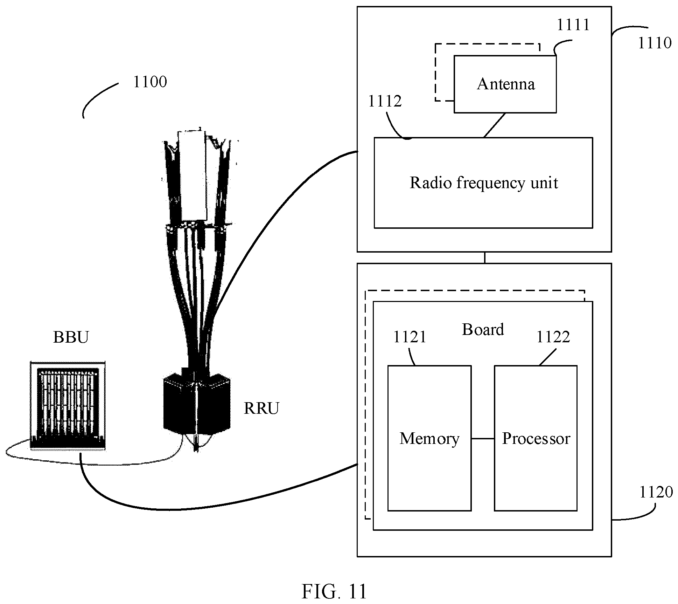

When the apparatus in this embodiment of this application is a network device, the apparatus may be as shown in FIG. 11. The apparatus 1100 includes one or more radio frequency units, such as a remote radio unit (remote radio unit, RRU) 1110 and one or more baseband units (baseband unit, BBU) (which may also be referred to as a digital unit (digital unit, DU)) 1120. The RRU 1110 may be referred to as a transceiver module. The transceiver module may include a sending module and a receiving module, or the transceiver module may be a module that can implement sending and receiving functions. The transceiver module may correspond to the transceiver module 620 in FIG. 6. Optionally, the transceiver module may also be referred to as a transceiver machine, a transceiver circuit, a transceiver, or the like, and may include at least one antenna 1111 and a radio frequency unit 1112. The RRU 1110 is mainly configured to: receive and send a radio frequency signal, and perform conversion between a radio frequency signal and a baseband signal, for example, send indication information to a terminal device. The BBU 1120 is mainly configured to: perform baseband processing, control the base station, and so on. The RRU 1110 and the BBU 1120 may be physically disposed together, or may be physically separated, namely, in a distributed base station.

The BBU 1120 is a control center of the base station, or may be referred to as a processing module. The BBU 1120 may correspond to a processing module 610 in FIG. 6, and is mainly configured to implement a baseband processing function, for example, channel coding, multiplexing, modulation, or spreading. For example, the BBU (the processing module) may be configured to control the base station to perform an operation procedure related to the network device in the foregoing method embodiment, for example, generate the foregoing indication information.

In an example, the BBU 1120 may include one or more boards, and a plurality of boards may jointly support a radio access network (for example, an LTE network) having a single access standard, or may separately support radio access networks (for example, the LTE network, a 5G network, or another network) having different access standards. The BBU 1120 further includes a memory 1121 and a processor 1122. The memory 1121 is configured to store necessary instructions and data. The processor 1122 is configured to control the base station to perform a necessary action, for example, configured to control the base station to perform an operation procedure related to the network device in the foregoing method embodiments. The memory 1121 and the processor 1122 may serve one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the first terminal device in the embodiment shown in FIG. 5A and FIG. 5B, and include the access network device in the embodiment shown in FIG. 5A and FIG. 5B. The first terminal device is, for example, the first terminal device 700 in FIG. 7, and the access network device is, for example, the access network device 600 in FIG. 6.

An embodiment of this application further provides a computer-readable storage medium. The computer-readable storage medium stores a computer program. When the computer program is executed by a computer, the computer may implement the procedure related to the first terminal device in the embodiment shown in FIG. 5A and FIG. 5B in the foregoing method embodiments.

An embodiment of this application further provides a computer-readable storage medium. The computer-readable storage medium is configured to store a computer program. When the computer program is executed by a computer, the computer may implement the procedure related to the access network device in the embodiment shown in FIG. 5A and FIG. 5B in the foregoing method embodiments.

An embodiment of this application further provides a computer program product. The computer program product is configured to store a computer program. When the computer program is executed by a computer, the computer may implement the procedure related to the first terminal device in the embodiment shown in FIG. 5A and FIG. 5B in the foregoing method embodiments.

An embodiment of this application further provides a computer program product. The computer program product is configured to store a computer program. When the computer program is executed by a computer, the computer may implement the procedure related to the access network device in the embodiment shown in FIG. 5A and FIG. 5B in the foregoing method embodiments.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but not limited to these memories and any memory of another proper type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person skilled in the art may be aware that units and algorithm steps in the examples described with reference to the embodiments disclosed in this specification can be implemented by electronic hardware or an interaction of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate parts may or may not be physically separate. Parts displayed as units may or may not be physical units, and may be located in one position or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the part of the technical solutions of this application or all of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium accessible by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A wireless communication method carried out by an access network device or a chip configured for the access network device, and comprising:

   receiving (S510) first paging information from a core network device, wherein the first paging information comprises an identifier of a first terminal device (700), and the first paging information further indicates a first group to which the first terminal device (700) belongs;
   determining (S511) a second group corresponding to the first group; and
   paging (S512) the first terminal device (700) in a first paging manner corresponding to the second group, wherein the paging (S512) the first terminal device (700) in a first paging manner corresponding to the second group comprises:
   sending first paging control information corresponding to the second group, to page the first terminal device (700), wherein the first paging control information is first downlink control information, DCI, wherein the first DCI is scrambled by using a first radio network temporary identity, RNTI, corresponding to the second group.

2. The method according to claim 1, wherein that the first paging information indicates a first group to which the first terminal device (700) belongs comprises:
   the first paging information comprises information about the first group.

3. The method according to claim 2, wherein the determining (S511) a second group corresponding to the first group comprises:
   determining the second group based on a mapping relationship between the first group and the second group.

4. The method according to any one of claims 1 to 3, wherein the method further comprises:
   sending a broadcast message, wherein the broadcast message comprises an identifier of the first group and the identifier of the second group corresponding to the first group.

5. The method according to claim 4, wherein the broadcast message further comprises information about the first paging manner corresponding to the second group.

6. A wireless communication method carried out by a terminal device or a chip configured for the terminal device, and comprising:

   determining (S507), based on first information indicating that the first terminal device (700) belongs to a first group, a second group corresponding to the first group that corresponds to the first terminal device (700); and
   monitoring (S512) first paging control information in a first paging manner corresponding to the second group, wherein the monitoring (S512) first paging control information in a first paging manner corresponding to the second group comprises monitoring first downlink control information, DCI, comprising a first radio network temporary identity, RNTI, wherein the first RNTI corresponds to the second group.

7. The method according to claim 6, wherein the first information is information about the first group, and the determining (S507), based on the information about the first group, the second group corresponding to the first group that corresponds to the first terminal device (700) comprises:
   determining the second group based on a mapping relationship between the first group and the second group.

8. The method according to claim 6 or 7, wherein the method further comprises:
   monitoring (S513) paging information based on the first paging control information.

9. A communication apparatus (600), comprising:
   a processing circuit (610), configured to invoke instructions in a memory to implement the method according to any one of claims 1 to 5.

10. A communication apparatus (700), comprising:
a processing circuit (710), configured to invoke instructions in a memory to implement the method according to any one of claims 6 to 8.

11. A computer-readable storage medium storing a computer program, and when the computer program is run on a computer of an access network device, the computer is enabled to perform the method according to any one of claims 1 to 5, or when run on a computer of a terminal device, the computer is enabled to perform the method according to any one of claims 6 to 8.

12. A chip, comprising instructions to perform the method according to any one of claims 1 to 5 or the method according to any one of claims 6 to 8, when the chip is integrated in an access network device or a terminal device, respectively.

**Patentansprüche**

1. Kommunikationsverfahren, das durch eine Zugangsnetzeinrichtung oder einen Chip, der für die Zugangsnetzeinrichtung konfiguriert ist, durchgeführt wird, und umfassend:

Empfangen (S510) von ersten Funkrufinformationen von einer Kernnetzeinrichtung, wobei die ersten Funkrufinformationen eine Kennung einer ersten Endgeräteeinrichtung (700) umfassen und die ersten Funkrufinformationen ferner eine erste Gruppe, zu der die erste Endgeräteeinrichtung (700) gehört, angeben;
Bestimmen (S511) einer zweiten Gruppe, die der ersten Gruppe entspricht; und
Rufen (S512) der ersten Endgeräteeinrichtung (700) per Funkruf in einer ersten Funkrufart, die der zweiten Gruppe entspricht, wobei das Rufen (S512) der ersten Endgeräteeinrichtung (700) per Funkruf in einer ersten Funkrufart, die der zweiten Gruppe entspricht, Folgendes umfasst:
Senden von ersten Funkrufsteuerinformationen, die der zweiten Gruppe entsprechen, um die erste Endgeräteeinrichtung (700) per Funkruf zu rufen, wobei es sich bei den ersten Funkrufsteuerinformationen um erste Downlink-Steuerinformationen, DCI, handelt, wobei die ersten DCI unter Verwendung einer ersten temporären Funknetzidentität, RNTI, die der zweiten Gruppe entspricht, verwürfelt werden.

2. Verfahren nach Anspruch 1, wobei, dass die ersten Funkrufinformationen eine erste Gruppe angeben, zu der die erste Endgeräteeinrichtung (700) gehört, Folgendes umfasst:
die ersten Funkrufinformationen umfassen Informationen über die erste Gruppe.

3. Verfahren nach Anspruch 2, wobei das Bestimmen (S511) einer zweiten Gruppe, die der ersten Gruppe entspricht, Folgendes umfasst:
Bestimmen der zweiten Gruppe anhand einer Abbildungsbeziehung zwischen der ersten Gruppe und der zweiten Gruppe.

4. Verfahren nach einem der Ansprüche 1 bis 3, wobei das Verfahren ferner Folgendes umfasst:
Senden einer Rundrufnachricht, wobei die Rundrufnachricht eine Kennung der ersten Gruppe und die Kennung der zweiten Gruppe, die der ersten Gruppe entspricht, umfasst.

5. Verfahren nach Anspruch 4, wobei die Rundrufnachricht ferner Informationen über die erste Funkrufart, die der zweiten Gruppe entspricht, umfasst.

6. Drahtloses Kommunikationsverfahren, das durch eine Endgeräteeinrichtung oder einen Chip, der für die Endgeräteeinrichtung konfiguriert ist, durchgeführt wird, und umfassend:

Bestimmen (S507), basierend auf ersten Informationen, die angeben, dass die erste Endgeräteeinrichtung (700) zu einer ersten Gruppe gehört, einer zweiten Gruppe, die der ersten Gruppe entspricht und die der ersten Endgeräteeinrichtung (700) entspricht; und
Überwachen (S512) von ersten Funkrufsteuerinformationen in einer ersten Funkrufart, die der zweiten Gruppe entspricht, wobei das Überwachen (S512) von ersten Funkrufsteuerinformationen in einer ersten Funkrufart, die der zweiten Gruppe entspricht, Überwachen von ersten Downlink-Steuerinformationen, DCI, die eine erste temporäre Funknetzidentität, RNTI, umfassen, umfasst, wobei die erste RNTI der zweiten Gruppe entspricht.

**7.** Verfahren nach Anspruch 6, wobei es sich bei den ersten Informationen um Informationen über die erste Gruppe handelt und das Bestimmen (S507), basierend auf den Informationen über die erste Gruppe, der zweiten Gruppe, die der ersten Gruppe und der ersten Endgeräteeinrichtung (700) entspricht, Folgendes umfasst:
Bestimmen der zweiten Gruppe anhand einer Abbildungsbeziehung zwischen der ersten Gruppe und der zweiten Gruppe.

**8.** Verfahren nach Anspruch 6 oder 7, wobei das Verfahren ferner Folgendes umfasst:
Überwachen (S513) von Funkrufinformationen basierend auf den ersten Funkrufsteuerinformationen.

**9.** Kommunikationsvorrichtung (600), umfassend:
eine Verarbeitungsschaltung (610), die dazu konfiguriert ist, Anweisungen in einem Speicher aufzurufen, um das Verfahren nach einem der Ansprüche 1 bis 5 umzusetzen.

**10.** Kommunikationsvorrichtung (700), umfassend:
eine Verarbeitungsschaltung (710), die dazu konfiguriert ist, Anweisungen in einem Speicher aufzurufen, um das Verfahren nach einem der Ansprüche 6 bis 8 umzusetzen.

**11.** Computerlesbares Speichermedium, das ein Computerprogramm speichert und, wenn das Computerprogramm auf einem Computer einer Zugangsnetzeinrichtung ausgeführt wird, der Computer in die Lage versetzt wird, das Verfahren nach einem der Ansprüche 1 bis 5 durchzuführen, oder, wenn es auf einem Computer einer Endgeräteeinrichtung ausgeführt wird, der Computer in die Lage versetzt wird, das Verfahren nach einem der Ansprüche 6 bis 8 durchzuführen.

**12.** Chip, umfassend Anweisungen, um das Verfahren nach einem der Ansprüche 1 bis 5 oder das Verfahren nach einem der Ansprüche 6 bis 8 durchzuführen, wenn der Chip in eine Zugangsnetzeinrichtung bzw. eine Endgeräteeinrichtung integriert ist.

**Revendications**

**1.** Procédé de communication sans fil réalisé par un dispositif de réseau d'accès ou une puce configurée pour le dispositif de réseau d'accès, et comprenant :

la réception (S510) de premières informations de radiomessagerie d'un dispositif de réseau central, dans lequel les premières informations de radiomessagerie comprennent un identifiant d'un premier dispositif terminal (700), et les premières informations de radiomessagerie indiquent également un premier groupe auquel appartient le premier dispositif terminal (700) ;
la détermination (S511) d'un second groupe correspondant au premier groupe ; et
la mise en radiomessagerie (S512) du premier dispositif terminal (700) selon un premier mode de radiomessagerie correspondant au second groupe, dans lequel la mise en radiomessagerie (S512) du premier dispositif terminal (700) selon un premier mode de radiomessagerie correspondant au second groupe comprend :
l'envoi de premières informations de commande de radiomessagerie correspondant au second groupe, pour mettre en radiomessagerie le premier dispositif terminal (700), dans lequel les premières informations de commande de radiomessagerie sont des premières informations de commande de liaison descendante, DCI, dans lequel les premières DCI sont brouillées à l'aide d'une première identité temporaire de réseau radio, RNTI, correspondant au second groupe.

**2.** Procédé selon la revendication 1, dans lequel le fait que les premières informations de radiomessagerie indiquent un premier groupe auquel appartient le premier dispositif terminal (700) comprend :
les premières informations de radiomessagerie comprennent des informations sur le premier groupe.

**3.** Procédé selon la revendication 2, dans lequel la détermination (S511) d'un second groupe correspondant au premier groupe comprend :
la détermination du second groupe sur la base d'une relation de correspondance entre le premier groupe et le second groupe.

**4.** Procédé selon l'une quelconque des revendications 1 à 3, dans lequel le procédé comprend également :
l'envoi d'un message de diffusion, dans lequel le message de diffusion comprend un identifiant du premier groupe et l'identifiant du second groupe correspondant au premier groupe.

5. Procédé selon la revendication 4, dans lequel le message de diffusion comprend également des informations sur le premier mode de radiomessagerie correspondant au second groupe.

6. Procédé de communication sans fil réalisé par un dispositif terminal ou une puce configurée pour le dispositif terminal, et comprenant :

la détermination (S507), sur la base de premières informations indiquant que le premier dispositif terminal (700) appartient à un premier groupe, d'un second groupe correspondant au premier groupe qui correspond au premier dispositif terminal (700) ; et
la surveillance (S512) de premières informations de commande de radiomessagerie selon un premier mode de radiomessagerie correspondant au second groupe, dans lequel la surveillance (S512) de premières informations de commande de radiomessagerie selon un premier mode de radiomessagerie correspondant au second groupe comprend la surveillance de premières informations de commande de liaison descendante, DCI, comprenant une première identité temporaire de réseau radio, RNTI, dans lequel le premier RNTI correspond au second groupe.

7. Procédé selon la revendication 6, dans lequel les premières informations sont des informations sur le premier groupe, et la détermination (S507), sur la base des informations sur le premier groupe, du second groupe correspondant au premier groupe qui correspond au premier dispositif terminal (700) comprend :
la détermination du second groupe sur la base d'une relation de correspondance entre le premier groupe et le second groupe.

8. Procédé selon la revendication 6 ou 7, dans lequel le procédé comprend également :
la surveillance (S513) d'informations de radiomessagerie sur la base des premières informations de commande de radiomessagerie.

9. Appareil de communication (600), comprenant :
un circuit de traitement (610), configuré pour invoquer des instructions dans une mémoire pour mettre en œuvre le procédé selon l'une quelconque des revendications 1 à 5.

10. Appareil de communication (700), comprenant :
un circuit de traitement (710), configuré pour invoquer des instructions dans une mémoire pour mettre en œuvre le procédé selon l'une quelconque des revendications 6 à 8.

11. Support de stockage lisible par ordinateur stockant un programme informatique, et lorsque le programme informatique fonctionne sur un ordinateur d'un dispositif de réseau d'accès, l'ordinateur est activé pour réaliser le procédé selon l'une quelconque des revendications 1 à 5, ou lorsqu'il fonctionne sur un ordinateur d'un dispositif terminal, l'ordinateur est activé pour réaliser le procédé selon l'une quelconque des revendications 6 à 8.

12. Puce, comprenant des instructions pour réaliser le procédé selon l'une quelconque des revendications 1 à 5 ou le procédé selon l'une quelconque des revendications 6 à 8, lorsque la puce est intégrée respectivement dans un dispositif de réseau d'accès ou un dispositif terminal.

FIG. 1

FIG. 2

FIG. 3

FIG. 4

| First terminal device | Access network device | Core network device |
|---|---|---|

S501: Second information (used to determine a group to which the first terminal device belongs in a first grouping manner)

S502: Determine the group to which the first terminal device belongs in the first grouping manner

S503: Information about a first group

S504: Determine M groups in the first grouping manner based on a first parameter, and determine N groups in a second grouping manner based on a second parameter

S505: Establish a mapping relationship between the M groups and the N groups

S506: Mapping relationship

S507: Determine, based on first information, that the first terminal device belongs to a second group

TO
FIG. 5B

TO
FIG. 5B

TO
FIG. 5B

FIG. 5A

CONT.
FROM
FIG. 5A

CONT.
FROM
FIG. 5A

CONT.
FROM
FIG. 5A

S508: Obtain paging
information of the first
terminal device

S509: Determine that
the first terminal device
belongs to the first
group in the first
grouping manner, or
determine that the first
terminal device does not
belong to any group

S510: First paging information
(including an identifier of the
first terminal device)

S512: Monitor
the first paging
control
information in
a first paging
manner
corresponding
to the second
group

S511: Determine the
second group

S512: First paging control
information corresponding to
the second group

S513: Monitor
paging
information

FIG. 5B

Access network device 600

| Processing module 610 | Transceiver module 620 |

FIG. 6

First terminal device 700

| Processing module 710 | Transceiver module 720 |

FIG. 7

FIG. 8

Data sending processor 920

Channel encoder — Modulator — Symbol generation module

Processor 910

Data receiving processor 930

Channel decoder — Demodulator — Channel estimation module

FIG. 9

Processing apparatus 1000

Radio frequency apparatus ⟷ Modulation subsystem

Multimedia subsystem

Central processing subsystem

Peripheral subsystem

1006 Memory    1004 Interface

1003 Processor

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021066726 A1

**Non-patent literature cited in the description**

- **ERICSSON et al.** Introduction of WUS grouping. *3GPP DRAFT; R3-201014, 3RD GENERATION PARTNERSHIP PROJECT (3GPP), MOBILE COMPETENCE CENTR ; 650, ROUTE DES LUCIOLES; F-06921, SOPHIA-ANTIPOLIS CEDEX; FRANCE*, 24 February 2020, vol. RAN WG3
- **QUALCOMM INCORPORATED**. Serviced based UE sub-grouping on wake-up signal channel. *3GPP DRAFT; R2-1910465 SERVICE BASED WUS GROUPING, 3RD GENERATION PARTNERSHIP PROJECT (3GPP), MOBILE COMPETENCE CENTRE; 650, ROUTE DES LUCIOLES; F-06921; SOPHIA-ANTIPOLIS CEDEX; FRANCE*, 26 August 2019, vol. RAN WG2 (Prague)

- **VIVO**. Remaining aspects of PDCCH-based power saving signal. *3GPP DRAFT; R1-1912049, 3RD GENERATION PARTNERSHIP PROJECT (3GPP), MOBILE COMPETENCE CENTRE; 650, ROUTE DES LUCIOLES; F-06921, SOPHIA-ANTIPOLIS CEDEX; FRANCE*, vol. RAN WG1 (Reno), 1-11